# EUROPÄISCHE PATENTSCHRIFT

(11) **EP 3 368 768 B1**
(45) Veröffentlichungstag und Bekanntmachung des Hinweises auf die Patenterteilung: **23.10.2019**
(21) Anmeldenummer: 16790938.1
(22) Anmeldetag: 28.10.2016
(51) Int. Cl.: F04B 17/04, A47J 31/46

(54) **HAUSHALTSGERÄT**
DOMESTIC APPLIANCE
APPAREIL ÉLECTROMÉNAGER

(30) Priorität: 29.10.2015 DE 102015118529
(43) Veröffentlichungstag der Anmeldung: 05.09.2018
(73) Patentinhaber: Sysko AG, 7000 Chur (CH)
(72) Erfinder: HELBLING, Norbert, 8645 Jona (CH); WISSKIRCHEN, Michael, 88410 Bad Wurzach (DE); PARTZSCH, Fred, 88099 Neukirch (DE)
(74) Vertreter: Daub, Thomas
(86) Internationale Anmeldenummer: PCT/EP2016/076118
(87) Internationale Veröffentlichungsnummer: WO 2017/072314

(56) Entgegenhaltungen:
- DE-A1- 1 653 516
- DE-A1-102013 107 481
- DE-U1- 20 019 406
- US-A- 2 458 770

## Beschreibung

### Stand der Technik

Die Erfindung betrifft ein Haushaltsgerät mit einer Getränkepumpe.

Aus der DE 10 2013 107 481 A1 und der WO 2013/004620 A1 sind jeweils bereits eine Getränkepumpe für ein Haushaltsgerät, insbesondere für einen Getränkeautomaten, zu einer Förderung einer Flüssigkeit, mit zumindest einer Polhülse zu einer Leitung eines von einem Magnetaktor erzeugten magnetischen Flusses bekannt.

Die Aufgabe der Erfindung besteht insbesondere darin, eine besonders effiziente und kostengünstige Getränkepumpe bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Haushaltsgerät, insbesondere einem Getränkeautomaten, mit einer Getränkepumpe, zu einer Förderung einer Flüssigkeit, wobei die Getränkepumpe zumindest eine Polhülse zu einer Leitung eines von einem Magnetaktor erzeugten magnetischen Flusses aufweist.

Es wird vorgeschlagen, dass die Polhülse entlang einer Hauptströmungsrichtung der Flüssigkeit eine sich wesentlich verändernde magnetische Leitfähigkeit aufweist.

Dadurch kann ein vorteilhafter Verlauf einer auf einen Anker wirkenden magnetischen Kraft erreicht werden. Es kann eine besonders effiziente Getränkepumpe bereitgestellt werden. Es kann eine effiziente Getränkepumpe mit einer geringen Metallmenge, insbesondere mit einer geringen Kupfermenge, einer Spule des Magnetaktors erreicht werden, wodurch eine besonders kostengünstige Getränkepumpe bereitgestellt werden kann. Unter einem "Getränkeautomaten" soll in diesem Zusammenhang insbesondere ein Automat verstanden werden, der zu einer portionsweisen Ausgabe und/oder Zubereitung von Getränken, wie beispielsweise Kaffee, Tee, Kakao und/oder anderen Milchmischgetränken und/oder Aufbrühgetränken, vorgesehen ist. Vorzugsweise ist der Getränkeautomat als ein Kaffeeautomat, bevorzugt als ein Kaffee-Vollautomat ausgebildet. Vorzugsweise ist die Getränkepumpe als eine Schwingkolbenpumpe ausgebildet. Vorzugsweise weist die Getränkepumpe zumindest einen schwimmend gelagerten Arbeitskolben auf, der dazu vorgesehen ist, insbesondere von dem von der Polhülse geleiteten magnetischen Fluss angetrieben zu werden. Insbesondere ist der Arbeitskolben zu einer anschlagfreien Bewegung in der Pumpkammer vorgesehen. Vorzugsweise ist der Arbeitskolben zu einer Bewegung zumindest im Wesentlichen parallel zu einer Mittelachse der Polhülse vorgesehen. Vorzugsweise ist die Getränkepumpe als eine Hochdruckschwingkolbenpumpe ausgebildet und dazu vorgesehen, einen Druck von wenigstens 10 bar, vorzugsweise von wenigstens 15 bar, bereitzustellen. Es ist auch denkbar, dass die Getränkepumpe als eine Niederdruckschwingkolbenpumpe ausgebildet und dazu vorgesehen ist, einen Druck von wenigstens 3 bar bereitzustellen. Insbesondere ist die Getränkepumpe als eine Haushaltsgeräteschwingkolbenpumpe ausgebildet. Vorzugsweise ist die Getränkepumpe als eine Getränkeautomatenpumpe ausgebildet. Vorzugsweise weist die Getränkepumpe einen Eisenkreis auf, der die zumindest eine Polhülse umfasst. Vorzugsweise ist die Polhülse zumindest im Wesentlichen röhrenförmig ausgebildet, beispielsweise als ein Rollteil. Es ist denkbar, dass die Polhülse geschlitzt ausgebildet ist, d.h. einen Schlitz aufweist, der sich in axialer Richtung erstreckt. Insbesondere weist die Getränkepumpe eine Pumpkammer auf, in welcher der Arbeitskolben geführt ist. Bevorzugt weist die Polhülse die Form eines Hohlzylinders und eine Mittelachse auf. Die Polhülse umgibt die Pumpkammer. Vorzugsweise ist die Polhülse außerhalb der Pumpkammer angeordnet. Richtungsbezeichnungen wie "axial", "radial", "in Umfangsrichtung" sollen bezogen auf eine Mittelachse der Pumpkammer und/oder bezogen auf die Mittelachse der Polhülse verstanden werden. Unter "axial" soll in Richtung der Mittelachse der Pumpkammer und/oder in Richtung der Mittelachse der Polhülse verstanden werden. Unter einer "Hauptströmungsrichtung" soll in diesem Zusammenhang insbesondere eine Richtung verstanden werden, in die sich die zu fördernde Flüssigkeit gemittelt über eine Zeit, beispielsweise über die Dauer einer Portionenausgabe, bewegt. Insbesondere entspricht die Hauptströmungsrichtung der axialen Richtung. Insbesondere weist die Polhülse entlang einer axialen Richtung eine sich wesentlich verändernde magnetische Leitfähigkeit auf. Unter "radial" soll in diesem Zusammenhang insbesondere eine Richtung senkrecht zu der Mittelachse der Polhülse und/oder senkrecht zu der Mittelachse der Pumpkammer ausgehend von der jeweiligen Mittelachse nach außen verstanden werden. Unter "in Umfangsrichtung" soll in diesem Zusammenhang insbesondere eine entlang eines Kreisbogens um die Mittelachse der Polhülse und/oder um die Mittelachse der Pumpkammer in einer Ebene senkrecht zu der Mittelachse der Polhülse und/oder senkrecht zu der Mittelachse der Pumpkammer verstanden werden. Darunter, dass sich die magnetische Leitfähigkeit "wesentlich verändert", soll in diesem Zusammenhang insbesondere verstanden werden, dass sich Werte der magnetischen Leitfähigkeit an in axialer Richtung beabstandeten Punkten um wenigstens 20 %, vorzugsweise um wenigstens 40 %, bevorzugt um wenigstens 60 % und besonders bevorzugt um wenigstens 80 % unterscheiden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Polhülse weist in einem axialen Randbereich eine verminderte magnetische Leitfähigkeit auf. Dadurch kann eine Hubhöhe eines Ankers besonders vorteilhaft eingestellt werden. Es kann eine besonders flexibel anpassbare Getränkepumpe bereitgestellt werden. Unter einem "axialen Randbereich" soll in diesem Zusammenhang ein Bereich der Polhülse verstanden werden, der von einem axialen Rand der Polhülse begrenzt wird. Vorzugsweise ist der axiale Randbereich in einem montierten Zustand an einem bezogen auf die Hauptströmungsrichtung stromabwärts orientierten Ende der Polhülse angeordnet. Vorzugsweise ist der axiale Randbereich an einem auslassseitigen Ende der Polhülse angeordnet. Bevorzugt ist der axiale Randbereich in einer Ruheposition eines Arbeitskolbens an einem dem Arbeitskolben zugewandten Ende der Polhülse angeordnet. Vorzugsweise nimmt in dem axialen Randbereich die magnetische Leitfähigkeit in Richtung des Randes zumindest im Wesentlichen monoton ab. Bevorzugt nimmt in dem axialen Randbereich die magnetische Leitfähigkeit in Richtung des Randes zumindest im Wesentlichen stetig ab. Unter einer "magnetischen Leitfähigkeit" soll in diesem Zusammenhang insbesondere eine extensive Größe verstanden werden. Es ist denkbar, dass die extensive magnetische Leitfähigkeit aufgrund einer Abnahme einer intensiven magnetischen Leitfähigkeit abnimmt, beispielsweise aufgrund einer sich in axialer Richtung verändernden Stoffzusammensetzung in der Polhülse. Vorzugsweise ist die Polhülse zumindest im Wesentlichen aus einem ferromagnetischen Material hergestellt. Vorzugsweise ist die Polhülse zumindest im Wesentlichen aus Stahl hergestellt, bevorzugt aus unlegiertem Qualitätsstahl. Es ist denkbar, dass die Polhülse in dem axialen Randbereich zumindest ein weiteres Material, beispielsweise eine Legierung und/oder einen Kunststoff aufweist.

Ferner wird vorgeschlagen, dass die Polhülse in dem axialen Randbereich ein vermindertes wirksames Wandmaterialvolumen aufweist. Dadurch kann ein besonders einfacher und/oder kostengünstiger Herstellungsprozess erreicht werden. Es kann eine besonders kostengünstige Polhülse bereitgestellt werden. Unter einem "vermindert wirksamen" Wandmaterialvolumen soll in diesem Zusammenhang insbesondere ein vermindert magnetisch wirksames Wandmaterialvolumen verstanden werden. Beispielsweise ist das Wandmaterialvolumen durch einen Fräsprozess oder durch einen Wälzprozess vermindert.

In vorteilhafter Weise ist der axiale Randbereich der Polhülse gebuchtet ausgebildet. Dadurch kann ein Herstellungsprozess weiter vereinfacht werden. Die Polhülse kann kostengünstig in einem Stanzprozess hergestellt werden. Unter "gebuchtet" soll in diesem Zusammenhang insbesondere mit zumindest einem Einschnitt versehen verstanden werden. Vorzugsweise weist die Polhülse entlang einer Umfangsrichtung zumindest zwei unterschiedliche Höhen auf. Vorzugsweise weist die Polhülse entlang einer Umfangsrichtung zumindest zwei unterschiedliche Werte für eine axiale Erstreckung auf. Bevorzugt weist der Randbereich eine Mehrzahl von Einschnitten, beispielsweise wenigstens zwei, drei, vier, fünf oder sechs Einschnitte auf. Vorzugsweise sind die Einschnitte analog zueinander ausgebildet und/oder weisen eine gleiche Einschnitttiefe auf. Es ist denkbar, dass die Einschnitte unterschiedlich ausgebildet sind und sich beispielsweise Einschnitte mit unterschiedlicher Einschnitttiefe entlang einer Umfangsrichtung abwechseln. Vorzugsweise sind die Einschnitte zumindest im Wesentlichen gleichmäßig entlang einer Umfangsrichtung verteilt an dem Randbereich angeordnet. Bevorzugt weist der Randbereich eine zumindest im Wesentlichen periodische Kontur auf. Es ist denkbar, dass der axiale Randbereich gewellt oder gezackt ausgebildet ist. Vorzugsweise ist der axiale Randbereich kronenförmig ausgebildet. Bevorzugt sind die Einschnitte trapezförmig ausgebildet.

Ferner wird vorgeschlagen, dass die Polhülse in dem axialen Randbereich eine verminderte Wandstärke aufweist. Dadurch kann eine in dem axialen Randbereich besonders stabil ausgebildete Polhülse bereitgestellt werden. Insbesondere weist die Polhülse ein axiales Schnittprofil auf, das in dem axialen Randbereich die verminderte Wandstärke aufweist. Unter einem "axialen Schnittprofil" soll in diesem Zusammenhang insbesondere ein Profil entlang eines Schnitts in einer Ebene parallel zu der Mittelachse der Polhülse verstanden werden. Unter einer "verminderten" Wandstärke soll in diesem Zusammenhang insbesondere eine Wandstärke verstanden werden, die sich bezogen auf eine axiale Richtung ändert, insbesondere verjüngt. Vorzugsweise nimmt die Wandstärke in dem axialen Randbereich in Richtung des Randes zumindest im Wesentlichen monoton ab. Insbesondere weist die Wandstärke an mindestens zwei axial voneinander beabstandeten Punkten unterschiedliche Werte auf. Vorzugsweise weist das axiale Schnittprofil eine Symmetrieachse auf, die vorzugsweise mit der Mittelachse der Polhülse zusammenfällt. Bevorzugt ist die Polhülse zumindest im Wesentlichen rotationssymmetrisch ausgebildet.

Ferner wird vorgeschlagen, dass die Polhülse eine Grundwandstärke aufweist, gegenüber der die Wandstärke in dem axialen Randbereich vermindert ist. Dadurch kann eine besonders einfache Form der Polhülse erreicht werden. Eine Polhülse kann aus einem zylindrischen Rohling hergestellt werden. Es kann ein besonders günstiger Herstellungsprozess erreicht werden. Unter einer "Grundwandstärke" soll insbesondere eine Wandstärke verstanden werden, die auf einem axialen Abschnitt zumindest im Wesentlichen konstant ist. Unter einer "konstanten Wandstärke" soll in diesem Zusammenhang insbesondere verstanden werden, dass die Wandstärke bezogen auf eine axiale Verschiebung konstant ist. Vorzugsweise ist die Grundwandstärke auf einem Viertel, bevorzugt auf einem Drittel, besonders bevorzugt auf einer Hälfte einer axialen Längserstreckung zumindest im Wesentlichen konstant. Unter "zumindest im Wesentlichen konstant" soll in diesem Zusammenhang insbesondere verstanden werden, mit Abweichungen um weniger als 2 %, vorzugsweise mit Abweichungen um weniger als 1 % und besonders bevorzugt mit Abweichungen um weniger als 0,5 %. Vorzugsweise weist die Polhülse eine maximale Randstärke auf, die der Grundwandstärke entspricht. Vorzugsweise beträgt die Grundwandstärke wenigstens 1,0 mm, bevorzugt wenigstens 2,0 mm, besonders bevorzugt wenigstens 2,5 mm und ganz besonders bevorzugt wenigstens 3,0 mm. Vorzugsweise ist in dem axialen Randbereich die Wandstärke zumindest im Wesentlichen durchgängig gegenüber einer Grundwandstärke und/oder gegenüber einer maximalen Wandstärke vermindert. Vorzugsweise wird der axiale Randbereich von zumindest einem Formelement, wie beispielsweise einer Nut, einer Stufe, und/oder einer Kante, insbesondere einer Kante einer Schräge, begrenzt. Vorzugsweise ist in axialer Richtung unmittelbar neben dem axialen Randbereich ein Bereich angeordnet, der die Grundwandstärke aufweist.

In vorteilhafter Weise umfasst die Getränkepumpe zumindest eine weitere Polhülse, die von der Polhülse durch einen Spalt beabstandet angeordnet ist. Dadurch lässt sich eine Effizienz der Getränkepumpe weiter steigern. Insbesondere umfasst der Eisenkreis die Polhülse und die weitere Polhülse. Unter einem Spalt soll in diesem Zusammenhang insbesondere ein magnetisch isolierender Spalt verstanden werden. Vorzugsweise ist der Spalt in einem montierten Zustand von einem magnetischen Isolator erfüllt, wie beispielsweise Luft, Gummi, einem Kunststoff und/oder einem zellulosehaltigen Material. Vorzugsweise ist der axiale Randbereich in einem montierten Zustand an einem dem Spalt zugewandten Ende der Polhülse angeordnet. Vorzugsweise weist die zumindest eine weitere Polhülse eine Grundwandstärke auf, die der Grundwandstärke der Polhülse entspricht. Vorzugsweise weisen die Polhülse und die weitere Polhülse einen gleichen Innenumfang auf. Vorzugsweise ist die Polhülse gegenüber der weiteren Polhülse einlassseitig angeordnet.

In einer vorteilhaften Ausgestaltung weist die Polhülse ein axiales Schnittprofil auf, das von einer Kraft-Weg-Kennlinie abgeleitet. Dadurch kann eine in vorteilhafter Weise flexibel einstellbare Getränkepumpe bereitgestellt werden. Eine Erwärmung der Getränkepumpe in einem Betrieb kann gering gehalten werden. Es kann eine gleichbleibende Leistung der Getränkepumpe erreicht werden. Es kann ein hoher Benutzerkomfort erreicht werden. Unter einer "Kraft-Weg-Kennlinie" soll in diesem Zusammenhang insbesondere eine Kennlinie und/oder Abhängigkeit verstanden werden, die eine auf einen Arbeitskolben der Schwingkolbenpumpe aufgrund eines magnetischen Flusses wirkende Kraft bezogen auf eine axiale Position des Arbeitskolbens wiedergibt. Vorzugsweise weist das Schnittprofil zumindest ein Formelement, insbesondere zumindest eine Stufe und/oder eine Schräge auf, mit zumindest einem geometrischen Parameter, der von der Kraft-Weg-Kennlinie abgeleitet ist. Vorzugsweise wird in einem Optimierungsverfahren die Wandstärke in dem Randbereich des axialen Schnittprofils, beispielsweise ausgehend von einem rechteckigen Schnittprofil, insbesondere durch Anfasen, vermindert und die Auswirkung auf die Kraft-Weg-Kennlinie und/oder auf eine Druck-Volumenstrom-Kennlinie der Schwingkolbenpumpe ausgewertet. In weiteren Verfahrensschritten wird die Wandstärke weiter vermindert, bis sich die Kraft-Weg-Kennlinie und/oder die Druck-Volumenstrom-Kennlinie der Schwingkolbenpumpe nicht weiter verbessern. Insbesondere wird eine maximal auf den Arbeitskolben bei einem Hub wirkende Kraft vermindert. Bevorzugt ist das axiale Schnittprofil von einem Wert und/oder von einer Steigung der Kraft-Weg-Kennlinie in einem Bereich des magnetisch isolierenden Spaltes abgeleitet und/oder von einem Wert und/oder von einer Steigung der Kraft-Weg-Kennlinie an dem Rand der Polhülse.

Ferner wird vorgeschlagen, dass das axiale Schnittprofil zumindest eine Schräge und/oder eine mehrfache Stufung aufweist. Dadurch kann eine Form des magnetischen Flusses, insbesondere in einem Bereich des magnetisch isolierenden Spalts in vorteilhafter Weise eingestellt werden. Es kann ein besonders günstiger Verlauf einer auf einen Arbeitskolben der Getränkepumpe wirkenden Magnetkraft, insbesondere in einem Bereich des magnetisch isolierenden Spalts, erreicht werden. Vorzugsweise weist die Wandstärke an einem dem magnetisch isolierenden Spalt zugewandten Rand der Polhülse ein Minimum auf, das an einem Rand der Schräge angeordnet ist. Vorzugsweise verläuft die Wandstärke in dem axialen Wandbereich zumindest im Wesentlichen monoton, d.h. die Wandstärke wächst mit zunehmender Entfernung von dem Rand der Polhülse. Vorzugsweise ist das axiale Schnittprofil von höchstens zwei konvexen Flächen ausgebildet, die bevorzugt spiegelsymmetrisch zueinander ausgebildet und angeordnet sind. Vorzugsweise sind die Schräge und/oder die mehrfache Stufung an einem Außenumfang der Polhülse angeordnet. Es ist auch denkbar, dass die Schräge und/oder die mehrfache Stufung an einem Innenumfang der Polhülse angeordnet sind. Es ist auch denkbar, dass das axiale Schnittprofil sowohl an einem Außenumfang als auch an einem Innenumfang jeweils zumindest ein Schräge und/oder eine mehrfache Stufung aufweist. Vorzugsweise weist das axiale Schnittprofil zumindest zwei Schrägen auf, die, insbesondere bezogen auf eine Symmetrieachse, symmetrisch zueinander ausgebildet und/oder angeordnet sind.

In einer vorteilhaften Ausgestaltung weist der axiale Randbereich eine axiale Erstreckung mit einem Wert von wenigstens 2 mm auf. Dadurch kann ein magnetischer Fluss, insbesondere im Bereich des magnetisch isolierenden Spalts, in besonders wirksamer Weise verändert werden. Eine Beanspruchung von Bauteilen der Getränkepumpe kann begrenzt werden. Es kann eine besonders langlebige Getränkepumpe bereitgestellt werden. Vorzugsweise weist die axiale Erstreckung des axialen Randbereichs einen Wert von wenigstens 3 mm, bevorzugt von wenigstens 4 mm und besonders bevorzugt von wenigstens 5 mm auf. Vorzugsweise beträgt die axiale Erstreckung des axialen Randbereichs wenigstens 20 %, bevorzugt wenigstens 25 % und besonders bevorzugt wenigstens 30 % einer axialen Gesamterstreckung der Polhülse.

Ferner wird vorgeschlagen, dass der axiale Randbereich eine axiale Erstreckung mit einem Wert von höchstens 10 mm aufweist. Dadurch kann ein Kraft-Gradient bezogen auf eine axiale Position, insbesondere im Bereich des magnetisch isolierenden Spalts, in besonders wirksamer Weise vermindert werden. Vorzugsweise weist die axiale Erstreckung des axialen Randbereichs einen Wert von höchstens 8 mm, bevorzugt von höchstens 6 mm und besonders bevorzugt von höchstens 5 mm auf. Vorzugsweise weist ein Verhältnis zwischen einer Grundwandstärke und der axialen Erstreckung des axialen Randbereichs einen Wert zwischen 0,5 und 2,5 auf. Vorzugsweise beträgt die axiale Erstreckung des axialen Randbereichs höchstens 90 %, bevorzugt höchstens 70 % und besonders bevorzugt höchstens 50 % eines Abstands eines Ankers der Schwingkolbenpumpe von einem dem Anker zugewandten Rand des Polhülse in einer Ruheposition des Ankers. Vorzugsweise beträgt die axiale Erstreckung des axialen Randbereichs wenigstens 10 %, bevorzugt wenigstens 20 % und besonders bevorzugt wenigstens 40 % eines Abstands eines Ankers der Schwingkolbenpumpe von einem dem Anker zugewandten Rand des Polhülse in einer Ruheposition des Ankers. Unter einer Ruheposition des Ankers soll in diesem Zusammenhang insbesondere eine Position des Ankers verstanden werden, die der Anker bei abgeschalteter Magnetspule, insbesondere aufgrund eines Kräftegleichgewichts von auf den Anker wirkenden Federelementen, einnimmt. Vorzugsweise beträgt die axiale Erstreckung des axialen Randbereichs höchstens 50 %, bevorzugt höchstens 40 %, besonders bevorzugt höchstens 30 % einer maximalen axialen Erstreckung der Polhülse.

In einer vorteilhaften Ausgestaltung weist das axiale Schnittprofil zumindest eine Schräge aufweist, die mit einer Mittelachse der Polhülse einen Winkel von höchstens 30 Grad einschließt. Dadurch kann eine besonders große Randwandstärke der Polhülse erreicht werden. Ein Verlauf einer Kraft-Weg-Kennlinie kann besonders genau eingestellt werden. Vorzugsweise schließt die Schräge mit der Mittelachse einen Winkel von höchstens 25 Grad, bevorzugt von höchstens 20 Grad und besonders bevorzugt von höchstens 15 Grad ein. Vorzugsweise weist das axiale Schnittprofil zumindest zwei Schrägen auf, die jeweils mit einer Mittelachse der Polhülse einen Winkel von höchstens 30 Grad einschließen und die, insbesondere bezogen auf eine Symmetrieachse, symmetrisch ausgebildet und/oder angeordnet sind.

In einer vorteilhaften Ausgestaltung weist das axiale Schnittprofil zumindest einen Abschnitt mit einer konstanten, verminderten Wandstärke aufweist, der eine axiale Erstreckung von wenigstens 2 mm aufweist. Dadurch kann eine besonders einfach aufgebaute Polhülse bereitgestellt werden. Eine Polhülse kann besonders kostengünstig aus zumindest zwei zylindrischen Elementen hergestellt werden. Vorzugsweise ist der Abschnitt des axialen Schnittprofils rechteckig ausgebildet. Bevorzugt weist das axiale Schnittprofil zumindest zwei, vorzugsweise rechteckig ausgebildete, Abschnitte mit einer konstanten, verminderten Wandstärke auf, die, insbesondere bezogen auf eine Symmetrieachse, symmetrisch zueinander ausgebildet und/oder angeordnet sind. Vorzugsweise ist der Abschnitt unmittelbar benachbart zu einem Abschnitt angeordnet, der eine Grundwandstärke aufweist. Bevorzugt weist das axiale Schnittprofil an einem Rand des Abschnitts eine Stufe auf. Unter einer "Stufe" soll in diesem Zusammenhang insbesondere ein Sprung zwischen zwei Werten einer Wandstärke, eines Radius und/oder eines Durchmessers verstanden werden. Insbesondere weisen zwei bezogen auf eine axiale Richtung auf verschiedenen Seiten der Stufe angeordnete Querschnitte eine unterschiedliche Wandstärke, einen unterschiedlichen Radius und/oder einen unterschiedlichen Durchmesser auf. Unter einem "Querschnitt" soll in diesem Zusammenhang insbesondere ein Schnitt entlang einer Ebene senkrecht zu einer axialen Richtung verstanden werden. Bevorzugt ist die Polhülse mehrteilig ausgebildet und weist ein erstes Zylinderelement mit der Grundwandstärke der Polhülse und zumindest ein weiteres Zylinderelement auf, das in dem Abschnitt angeordnet ist und das eine Wandstärke aufweist, die kleiner ist als die Grundwandstärke, insbesondere kleiner als eine Wandstärke des ersten Zylinderelements. Vorzugsweise weist der Abschnitt eine axiale Erstreckung von wenigstens 3 mm, bevorzugt von wenigstens 4mm und besonders bevorzugt von wenigstens 5 mm auf. Vorzugsweise ist die Stufe an einem Außenumfang angeordnet.

Ferner wird vorgeschlagen, dass das axiale Schnittprofil zumindest eine Stufe umfasst, die eine Höhe von wenigstens 0,2 mm aufweist. Dadurch kann ein besonders kompaktes axiales Schnittprofil erreicht werden. Vorzugsweise weist die Stufe eine Höhe von wenigstens 0,3 mm, bevorzugt von wenigstens 0,4 mm und besonders bevorzugt von wenigstens 0,5 mm auf. Vorzugsweise ist die Stufe an einem Rand, insbesondere an einem von dem Rand der Polhülse abgewandten Rand, des axialen Randbereichs angeordnet. Bevorzugt weist das axiale Schnittprofil eine Kombination aus zumindest einer Stufe und zumindest einer Schräge auf. Vorzugsweise umfasst das axiale Schnittprofil zumindest zwei Stufen, die jeweils eine Höhe von wenigstens 0,2 mm aufweisen und die, insbesondere bezogen auf eine Symmetrieachse, symmetrisch zueinander ausgebildet und/oder angeordnet sind.

Ferner wird vorgeschlagen, dass die Polhülse zumindest in dem axialen Randbereich einen konstanten Innendurchmesser aufweist. Dadurch kann ein besonders kleiner Abstand zwischen der Polhülse und dem Pumpraum erreicht werden. Eine Effizienz der Getränkepumpe kann weiter gesteigert werden. Unter "konstant" soll in diesem Zusammenhang konstant bezogen auf eine axiale Verschiebung, insbesondere bezogen auf in axialer Richtung gegeneinander versetzte Querschnitte verstanden werden.

In einer vorteilhaften Ausgestaltung weist das axiale Schnittprofil an einem Innenumfang zumindest eine Stufe auf. Es kann ein besonders kleiner minimaler Abstand zwischen der Polhülse und einem Ankerelement der Getränkepumpe bei einer Bewegung des Arbeitskolbens erreicht werden. Dadurch kann eine elektrische Energie besonders effizient in eine kinetische Energie des Arbeitskolbens umgewandelt werden. Eine Effizienz der Getränkepumpe kann weiter gesteigert werden.

Durch das Haushaltsgerät, insbesondere den Getränkeautomaten, mit der erfindungsgemäßen Getränkepumpe kann ein besonders effizientes Haushaltsgerät bereitgestellt werden. Eine Ausgabedauer kann über mehrere Portionsausgaben hinweg zumindest im Wesentlichen konstant gehalten werden. Es kann ein hoher Benutzerkomfort erreicht werden.

Die erfindungsgemäße Getränkepumpe und/oder das erfindungsgemäße Haushaltsgerät sollen/soll hierbei nicht auf die oben beschriebene Anwendung und Ausführungsform beschränkt sein. Insbesondere können/kann die erfindungsgemäße Handwerkzeugmaschinenvorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie von Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Ansicht eines erfindungsgemäßen Haushaltsgeräts,
- Fig. 2: einen Schnitt entlang einer Längsachse durch eine Getränkepumpe des Haushaltsgeräts,
- Fig. 3: eine Seitenansicht einer Polhülse der Getränkepumpe,
- Fig. 4: einen Schnitt der Polhülse entlang einer axialen Richtung,
- Fig. 5: eine Aufsicht auf die Polhülse,
- Fig. 6: einen Schnitt einer Polhülse für ein weiteres Ausführungsbeispiel mit einer mehrfachen Stufung,
- Fig. 7: einen Schnitt einer Polhülse für ein weiteres Ausführungsbeispiel mit einer Mehrzahl von Hülsenelementen,
- Fig. 8: einen Schnitt entlang einer Längsachse durch eine Getränkepumpe für ein Ausführungsbeispiel einer Polhülse mit einer Stufe an einem Innenumfang,
- Fig. 9: einen Längsschnitt der Polhülse,
- Fig. 10: eine perspektivische Ansicht einer Polhülse für ein weiteres Ausführungsbeispiel mit einem kronenförmigen Randbereich und
- Fig. 11: einen Schnitt entlang einer Längsachse durch eine Getränkepumpe mit der Polhülse mit dem kronenförmigen Randbereich.

### Beschreibung der Ausführungsbeispiele

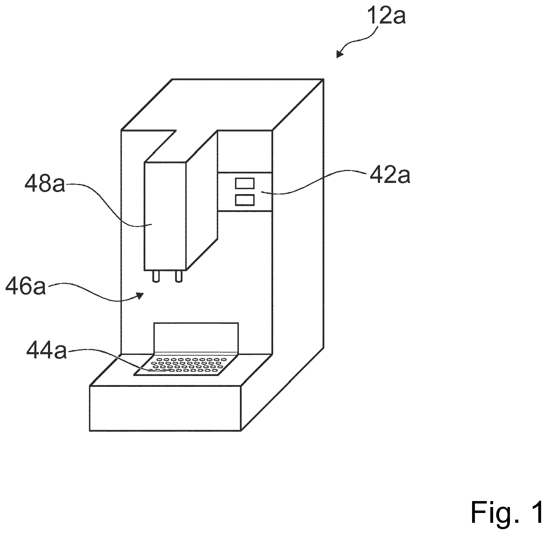

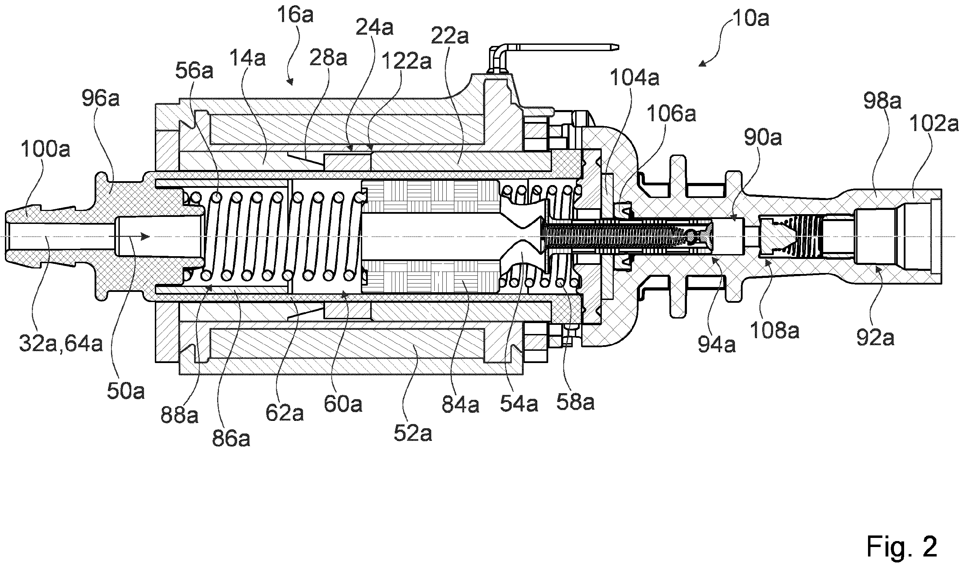

Figur 1 zeigt ein Haushaltsgerät 12a, das als ein Getränkeautomat ausgebildet ist. Das Haushaltsgerät 12a ist in dem vorliegenden Ausführungsbeispiel dazu vorgesehen, Getränke portioniert zuzubereiten und Getränkeportionen auszugeben. Das Haushaltsgerät 12a ist als ein Kaffeevollautomat ausgebildet. Das Haushaltsgerät 12a umfasst nicht näher dargestellte Vorratsbehälter für Wasser und für Kaffee. Das Haushaltsgerät 12a weist eine Bedieneinheit 42a auf, die zu einer Benutzereingabe vorgesehen ist. Das Haushaltsgerät 12a umfasst einen Abstellrost 44a und eine Gefäßaufnahme 46a. Das Haushaltsgerät 12a umfasst eine Ausgabeeinheit 48a zu einer Ausgabe von Getränkeportionen, insbesondere in ein in der Gefäßaufnahme 46a angeordnetes Gefäß. Das Haushaltsgerät 12a umfasst eine Getränkepumpe 10a (vgl. Figur 2). Die Getränkepumpe 10a ist zur Förderung einer Flüssigkeit, beispielsweise Wasser, unter einem Druck von wenigstens 12 bar vorgesehen. Die Getränkepumpe 10a ist dazu vorgesehen, Flüssigkeit gegen einen Staudruck von 12 bar zu fördern. Es ist denkbar, dass die Getränkepumpe 10a zur Förderung einer Flüssigkeit unter einem geringeren Druck, wie beispielsweise von wenigstens 8 bar, 7 bar oder 4 bar vorgesehen ist. Es ist auch denkbar, dass die Getränkepumpe 10a zur Förderung einer Flüssigkeit unter einem höheren Druck von beispielsweise 15 bar vorgesehen ist. Die Getränkepumpe 10a ist dazu vorgesehen, die Flüssigkeit in einer Hauptströmungsrichtung 50a zu fördern.

Die Getränkepumpe 10a umfasst einen Magnetaktor 16a mit einer Magnetspule 52a. Die Getränkepumpe 10a umfasst einen Arbeitskolben 54a. Der Magnetaktor 16a ist dazu vorgesehen, ein Magnetfeld zu einem Antrieb des Arbeitskolbens 54a bereitzustellen. Der Arbeitskolben 54a ist schwimmend gelagert. Die Getränkepumpe 10a umfasst zwei auf den Arbeitskolben 54a wirkende Federelemente 56a, 58a. Die Federelemente 56a, 58a sind dazu vorgesehen, in einander entgegengesetzten Richtungen auf den Arbeitskolben 54a zu wirken. Eines der Federelemente 56a ist als eine Pumpfeder ausgebildet. Das als Pumpfeder ausgebildete Federelement 56a ist dazu vorgesehen, den Arbeitskolben 54a bei einem Druckhub anzutreiben. Das Federelement 56a ist als eine Schraubendruckfeder ausgebildet. Die Getränkepumpe 10a weist eine Pumpkammer 60a auf, in welcher der Arbeitskolben 54a axial beweglich geführt ist. Die Pumpkammer 60a weist eine Pumpkammerwand 62a auf, die als eine Kolbenführung ausgebildet ist. Die Pumpkammer 60a durchsetzt das Spulengehäuse mit der Magnetspule 52a. Die Magnetspule 52a ist dazu vorgesehen, ein Magnetfeld zu erzeugen, das teilweise die Pumpkammer 60a durchsetzt. Die Pumpkammer 60a ist in dem vorliegenden Ausführungsbeispiel zumindest im Wesentlichen zylindrisch ausgebildet. Die Pumpkammer 60a weist eine Mittelachse 64a auf, die einer Zylinderachse entspricht und die zumindest im Wesentlichen parallel zu der Hauptströmungsrichtung 50a ausgerichtet ist.

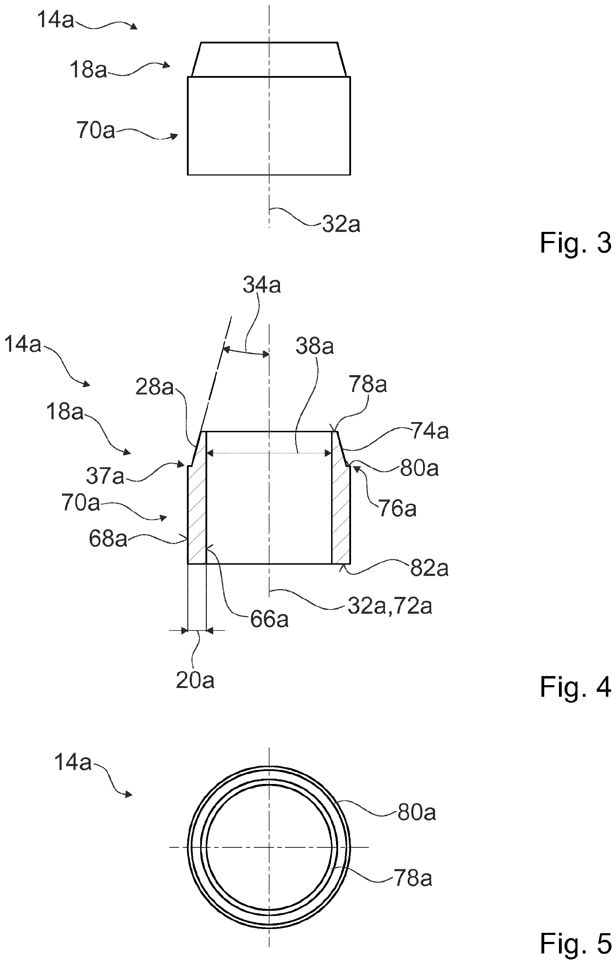

Zur Lenkung des Magnetfeldes umfasst die Getränkepumpe 10a einen Eisenkreis, welcher die Magnetspule 52a teilweise umgibt. Der Eisenkreis umfasst zumindest eine Polhülse 14a zu einer Leitung eines von dem Magnetaktor 16a erzeugten magnetischen Flusses (vgl. Figur 3). Die Polhülse 14a ist zumindest im Wesentlichen in Form eines Hohlzylinders ausgebildet. Die Polhülse 14a weist eine Mittelachse 32a auf, die einer Zylinderachse entspricht. Die Polhülse 14a weist einen Innenumfang 66a und einen Außenumfang 68a auf. In einem montierten Zustand fallen die Mittelachse 64a der Pumpkammer 60a und die Mittelachse 32a der Polhülse 14a zumindest im Wesentlichen zusammen. In einem montierten Zustand ist die Polhülse 14a koaxial zu der Pumpkammer 60a angeordnet. Die Polhülse 14a ist in dem vorliegenden Ausführungsbeispiel als ein Drehteil ausgebildet. Es ist denkbar, dass die Polhülse 14a nach einem anderen Verfahren hergestellt und beispielsweise als ein Rollteil ausgebildet ist. Die Polhülse 14a ist in dem vorliegenden Ausführungsbeispiel rotationssymmetrisch ausgebildet.

Die Polhülse 14a weist entlang der Hauptströmungsrichtung 50a der zu fördernden Flüssigkeit eine sich wesentlich verändernde magnetische Leitfähigkeit auf. Die Polhülse 14a weist in einem axialen Randbereich 18a eine verminderte magnetische Leitfähigkeit auf. Die Polhülse 14a weist in dem axialen Randbereich 18a ein vermindertes wirksames Wandmaterialvolumen auf. Die Polhülse 14a weist ein axiales Schnittprofil auf, das in dem axialen Randbereich 18a eine verminderte Wandstärke aufweist. Der axiale Randbereich 18a ist an einem axialen Rand der Polhülse 14a angeordnet. Die Polhülse 14a weist an dem axialen Rand eine minimale Wandstärke auf. Die Polhülse 14a weist an dem axialen Rand eine minimale Wandstärke bezogen auf den Randbereich 18a auf. In dem vorliegenden Ausführungsbeispiel weist die Polhülse 14a an dem axialen Rand eine Wandstärke von zumindest im Wesentlichen 0,8 mm auf. Es ist denkbar, dass die Polhülse 14a an dem axialen Rand eine kleinere Wandstärke als 0,8 mm oder eine verschwindende Wandstärke aufweist. Es ist denkbar, dass die Polhülse 14a an dem axialen Rand eine Wandstärke aufweist, die größer als 0,8 mm ist. Die Polhülse 14a weist in dem vorliegenden Ausführungsbeispiel in dem axialen Randbereich 18a einen konischen Verlauf auf. Die Wandstärke nimmt in dem axialen Randbereich 18a mit einem Abstand von dem axialen Rand zu. Die Wandstärke nimmt in dem axialen Randbereich 18a mit einem Abstand von dem axialen Rand monoton zu.

Die Polhülse 14a weist eine Grundwandstärke 20a auf, gegenüber der die Wandstärke in dem axialen Randbereich 18a vermindert ist. Die Wandstärke ist in dem axialen Randbereich 18a überall kleiner als die Grundwandstärke 20a. Die Polhülse 14a weist außerhalb des axialen Randbereichs 18a einen weiteren Bereich 70a auf, in dem die Wandstärke durchgängig der Grundwandstärke 20a entspricht. Die Wandstärke ist in dem weiteren Bereich 70a zumindest im Wesentlichen konstant. Der weitere Bereich 70a weist eine axiale Erstreckung auf, die zumindest im Wesentlichen 80 % einer axialen Gesamterstreckung der Polhülse 14a entspricht. Der weitere Bereich 70a erstreckt sich über mehr als zwei Drittel einer axialen Gesamterstreckung der Polhülse 14a. Der weitere Bereich 70a und der axiale Randbereich 18a umfassen die komplette Polhülse 14a. Die Grundwandstärke 20a entspricht einer maximalen Wandstärke der Polhülse 14a. Die Grundwandstärke 20a weist in dem vorliegenden Ausführungsbeispiel einen Wert von zumindest im Wesentlichen 2,5 mm auf.

Der Eisenkreis weist eine weitere Polhülse 22a auf, die von der Polhülse 14a durch einen Spalt 24a beabstandet angeordnet ist. Der Spalt 24a ist als ein magnetisch isolierender Spalt 24a ausgebildet. Der Spalt 24a weist eine Breite von zumindest im Wesentlichen 6,5 mm auf. Es ist denkbar, dass der Spalt 24a schmaler oder breiter ausgeführt ist. In dem Spalt 24a ist ein Distanzring aus einem nicht-magnetisierbaren Material angeordnet. Der Distanzring weist in dem vorliegenden Ausführungsbeispiel eine axiale Erstreckung von zumindest im Wesentlichen 6 mm auf. Die Polhülse 14a und die weitere Polhülse 22a schließen den magnetisch isolierenden Spalt 24a in axialer Richtung zwischen sich ein. Der magnetisch isolierende Spalt 24a unterbricht den Eisenkreis. In einem montierten Zustand begrenzt der axiale Rand des axialen Randbereichs 18a den magnetisch isolierenden Spalt 24a des Eisenkreises. Der magnetisch isolierende Spalt 24a ist räumlich axial zwischen der Polhülse 14a und der weiteren Polhülse 22a angeordnet. Der axiale Randbereich 18a der Polhülse 14a ist auf einer dem magnetisch isolierenden Spalt 24a zugewandten Seite der Polhülse 14a angeordnet. Die weitere Polhülse 22a weist eine Grundwandstärke auf, die der Grundwandstärke 20a der Polhülse 14a entspricht. Die Polhülse 14a und die weitere Polhülse 22a weisen eine gleiche Grundwandstärke 20a auf. Die Polhülse 14a und die weitere Polhülse 22a sind koaxial zueinander angeordnet. Die Polhülse 14a und die weitere Polhülse 22a sind fluchtend zueinander angeordnet. Die Polhülse 14a und die weitere Polhülse 22a weisen einen gleichen Außendurchmesser auf. Die Polhülse 14a ist gegenüber der weiteren Polhülse 22a bezogen auf die Hauptströmungsrichtung 50a stromaufwärts angeordnet. Die Polhülse 14a ist gegenüber der weiteren Polhülse 22a einlassseitig angeordnet. In einem montierten Zustand ist eine axiale Erstreckung einer Anordnung bestehend aus der Polhülse 14a, dem magnetisch isolierenden Spalt 24a und der weiteren Polhülse 22a größer als eine axiale Erstreckung der Magnetspule 52a.

Die Polhülse 14a und die weitere Polhülse 22a umgeben jeweils die Pumpkammer 60a. Die Polhülse 14a und die weitere Polhülse 22a sind radial zwischen der Magnetspule 52a und der Pumpkammer 60a angeordnet. Die weitere Polhülse 22a weist an einem dem magnetisch isolierenden Spalt 24a zugewandten Rand eine Fase 122a auf. Die Fase 122a ist an einem Außenumfang der weiteren Polhülse 22a angeordnet. Die Fase 122a weist einen Winkel von zumindest im Wesentlichen 45 Grad auf. Es ist denkbar, dass die Fase 122a einen von 45 Grad abweichenden Winkel, beispielsweise einen flacheren Winkel oder einen steileren Winkel gegenüber dem Außenumfang aufweist. Die Fase 122a weist eine Breite von zumindest im Wesentlichen 1,5 mm auf. Es ist denkbar, dass die Fase 122a eine größere Breite oder eine kleinere Breite aufweist. Es ist denkbar, dass die weitere Polhülse 22a fasenfrei ausgebildet ist.

Das axiale Schnittprofil ist von einer Kraft-Weg-Kennlinie abgeleitet. Die Kraft-Weg-Kennlinie gibt die Abhängigkeit einer Magnetkraft bezogen auf eine axiale Position des Arbeitskolbens 54a wieder. Die Magnetkraft stellt der Magnetaktor 16a aufgrund eines von dem Magnetaktor 16a hervorgerufenen magnetischen Flusses bereit.

Das axiale Schnittprofil weist zumindest ein Schräge 28a auf. Die Schräge 28a ist in dem axialen Randbereich 18a des axialen Schnittprofils angeordnet. Die Schräge 28a legt den axialen Randbereich 18a fest. Das axiale Schnittprofil weist in dem vorliegenden Ausführungsbeispiel eine Symmetrieachse 72a auf. Das axiale Schnittprofil weist bezogen auf die Symmetrieachse 72a eine weitere Schräge 74a auf, die symmetrisch zu der Schräge 28a ausgebildet und symmetrisch zu der Schräge 74a angeordnet ist. Die Schrägen 28a, 74a erstrecken sich in axialer Richtung zumindest im Wesentlichen über den gesamten axialen Randbereich 18a. Die Polhülse 14a weist an einem dem magnetisch isolierenden Spalt 24a zugewandten Rand eine durch die Schrägen 28a, 74a gebildete Fase auf. Die Schrägen 28a, 74a sind an einem Außenumfang 68a des axialen Randbereichs 18a angeordnet. Es ist auch denkbar, dass die Schrägen 28a, 74a an einem Innenumfang 66a des axialen Randbereichs 18a angeordnet sind. Die Schrägen 28a, 74a sind zumindest im Wesentlichen gerade ausgebildet. Der Randbereich 18a weist entlang der Schrägen 28a, 74a eine zumindest im Wesentlichen konstante Neigung auf. Es ist denkbar, dass die Schrägen 28a, 74a eine Krümmung aufweisen und beispielsweise konkav oder konvex ausgebildet sind. Es ist auch denkbar, dass der axiale Randbereich 18a in axialer Richtung aufeinanderfolgende Abschnitte mit unterschiedlicher Neigung aufweist und/oder einen geknickten Außenumfang 68a und/oder Innenumfang 66a aufweist.

Die Schrägen 28a, 74a weisen jeweils eine axiale Erstreckung und eine radiale Erstreckung auf, die von der Kraft-Weg-Kennlinie abgeleitet sind. Das axiale Schnittprofil ist von einem Wert und/oder von einer Steigung der Kraft-Weg-Kennlinie in einem Bereich des magnetisch isolierenden Spalts 24a abgeleitet und/oder von einem Wert und/oder von einer Steigung der Kraft-Weg-Kennlinie an dem Rand der Polhülse 14a.

Der axiale Randbereich 18a weist eine axiale Erstreckung mit einem Wert von wenigstens 2 mm auf. Die Polhülse 14a weist in dem vorliegenden Ausführungsbeispiel eine axiale Erstreckung von zumindest im Wesentlichen 18 mm auf. Der axiale Randbereich 18a weist eine axiale Erstreckung auf, die wenigstens 20 % einer axialen Gesamterstreckung der Polhülse 14a beträgt. Der axiale Randbereich 18a weist eine axiale Erstreckung mit einem Wert von höchstens 10 mm auf. Der axiale Randbereich 18a weist eine axiale Erstreckung auf, die höchstens 30 % einer Gesamterstreckung der Polhülse 14a beträgt. In dem vorliegenden Ausführungsbeispiel weist der axiale Randbereich 18a eine axiale Erstreckung von zumindest im Wesentlichen 4,7 mm auf. Die axiale Erstreckung des axialen Randbereichs 18a beträgt zumindest im Wesentlichen 25 % einer axialen Gesamterstreckung der Polhülse 14a. Es ist denkbar, dass die axiale Erstreckung des Randbereichs 18a einen von 4,7 mm abweichenden Wert aufweist. Ein Verhältnis der axialen Erstreckung des axialen Randbereichs 18a zu der Wandstärke beträgt zumindest im Wesentlichen 1,9.

Die Schrägen 28a, 74a des axialen Schnittprofils schließen jeweils mit der Mittelachse 32a der Polhülse 14a einen Winkel 34a von höchstens 30 Grad ein. Die Schrägen 28a, 74a des axialen Schnittprofils schließen jeweils mit der Mittelachse 32a der Polhülse 14a einen Winkel 34a von wenigstens 10 Grad ein (vgl. Figur 4). Die Schrägen 28a, 74a des axialen Schnittprofils schließen jeweils mit der Mittelachse 32a einen Winkel 34a von zumindest im Wesentlichen 15 Grad ein.

Das axiale Schnittprofil umfasst zumindest eine Stufe 37a, die eine Höhe von wenigstens 0,2 mm aufweist. In dem vorliegenden Ausführungsbeispiel umfasst das axiale Schnittprofil eine weitere Stufe 76a, die bezogen auf die Symmetrieachse 72a symmetrisch zu der Stufe 37a ausgebildet und symmetrisch zu der Stufe 76a angeordnet ist. Die Stufen 37a, 76a weisen jeweils eine Höhe von zumindest im Wesentlichen 0,5 mm auf. Die Stufen 37a, 76a sind an dem Außenumfang 68a der Polhülse 14a angeordnet. Die Stufen 37a, 76a begrenzen den axialen Randbereich 18a. Jeweils eine der Schrägen 28a, 74a ist räumlich zwischen einer der Stufen 37a, 76a und dem Rand der Polhülse 14a angeordnet.

Die Polhülse 14a weist in dem vorliegenden Ausführungsbeispiel drei senkrecht zu der Mittelachse 32a ausgerichtete Stirnflächen 78a, 80a, 82a auf. Eine erste der Stirnflächen 78a grenzt an den Innenumfang 66a der Polhülse 14a. Die erste Stirnfläche 78a ist als ein Kreisring ausgebildet. Die erste Stirnfläche 78a bildet den Rand der Polhülse 14a aus (vgl. Figur 5). Die erste der Stirnflächen 78a ist in einem montierten Zustand dem magnetisch isolierenden Spalt 24a zugewandt. Eine weitere der Stirnflächen 80a weist eine gleiche Orientierung wie die erste Stirnfläche 78a auf und grenzt an einen Außenumfang 68a der Polhülse 14a. Die weitere Stirnfläche 80a entspricht der Stufe 37a des axialen Schnittprofils. Die weitere Stirnfläche 80a ist als ein Kreisring ausgebildet. Die erste Stirnfläche 78a und die weitere Stirnfläche 80a sind konzentrisch zueinander angeordnet. Die erste Stirnfläche 78a und die weitere Stirnfläche 80a sind durch den konischen Verlauf des Außenumfangs 68a des axialen Randbereichs 18a miteinander verbunden. Eine dritte der Stirnflächen 82a ist an einem weiteren Rand der Polhülse 14a angeordnet. Die dritte Stirnfläche 82a ist in einem montierten Zustand dem magnetisch isolierenden Spalt 24a abgewandt angeordnet. Die dritte Stirnfläche 82a grenzt an den Innenumfang 66a und den Außenumfang 68a der Polhülse 14a.

Das axiale Schnittprofil weist zumindest in dem axialen Randbereich 18a einen konstanten Innendurchmesser 38a auf. Der Innenumfang 66a der Polhülse 14a ist in dem axialen Randbereich 18a zumindest im Wesentlichen glatt ausgebildet. Der Innenumfang 66a der Polhülse 14a ist in dem axialen Randbereich 18a in Form einer Zylindermantelfläche ausgebildet.

Der Arbeitskolben 54a der Getränkepumpe 10a umfasst ein Ankerelement 84a, das vollständig aus einem magnetisierbaren Material besteht. In einer Ruhestellung, d.h. bei abgeschalteter Magnetspule 52a, weist das Ankerelement 84a eine Ruheposition auf, bei der es teilweise mit dem Spalt 24a, der den Eisenkreis unterbricht, axial überlappt. In dem vorliegenden Ausführungsbeispiel beträgt in der Ruheposition des Ankerelements 84a ein Abstand des Ankerelements 84a von einem dem Ankerelement 84a zugewandten Rand der Polhülse 14a zumindest im Wesentlichen 10 mm. Die axiale Erstreckung des axialen Randbereichs 18a beträgt zumindest im Wesentlichen 47 % des Abstands des Ankerelements 84a von einem dem Ankerelement 84a zugewandten Rand der Polhülse 14a in der Ruheposition des Ankerelements 84a. Wird die Magnetspule 52a bestromt, stellt sich ein magnetischer Fluss in dem Eisenkreis und dem Ankerelement 84a ein, wobei ein magnetischer Widerstand, welcher diesem magnetischen Fluss entgegenwirkt, insbesondere durch eine verbleibende Spaltbreite zwischen dem Ankerelement 84a und dem Eisenkreis bestimmt ist. Ein solches System ist bestrebt, einen Zustand einzunehmen, in dem der magnetische Widerstand minimal ist. Auf das Ankerelement 84a wirkt eine Betätigungskraft, welche das Ankerelement 84a aus seiner Ruheposition gegen eine Kraft des als Pumpfeder ausgebildeten Federelements 56a auslenkt. In dem vorliegenden Ausführungsbeispiel ist das Ankerelement 84a stoffschlüssig mit einem Grundkörper des Arbeitskolbens 54a verbunden.

Die Getränkepumpe 10a umfasst ein Flussleitelement 86a, das dazu vorgesehen ist den von dem Magnetaktor 16a erzeugten magnetischen Fluss zu leiten und/oder zu bündeln. Das Flussleitelement 86a ist dazu vorgesehen, eine auf das Ankerelement 84a wirkende magnetische Kraft zu verstärken. Das Flussleitelement 86a ist als eine Hülse ausgebildet. Das Flussleitelement 86a ist innerhalb der Pumpkammer 60a angeordnet. Das Flussleitelement 86a liegt in einem montierten Zustand an der Pumpkammerwand 62a an. Das Flussleitelement 86a ist radial zwischen dem als Pumpfeder ausgebildeten Federelement 56a und der Pumpkammerwand 62a angeordnet.

Zur Erzielung einer Pumpwirkung wird die Magnetspule 52a mit einer pulsförmigen Spannung bestromt, wodurch sich im Bereich der Pumpkammer 60a ein sich ständig veränderndes Magnetfeld einstellt. Das sich pulsförmig verändernde und durch die Polhülsen 14a, 22a geleitete Magnetfeld bewirkt, dass der Arbeitskolben 54a mit ansteigender Stärke des Magnetfelds zunächst aus seiner Ruhestellung gegen die Kraft des als Pumpfeder ausgebildeten Federelements 56a ausgelenkt wird. Eine auf den Arbeitskolben 54a wirkende Magnetkraft, hängt von einer Felddichte am Ort des Ankerelements 84a ab, die wiederum insbesondere von der Form der Polhülsen 14a, 22a bestimmt wird. Sobald Strom durch die Magnetspule 52a reduziert wird und damit die Stärke des Magnetfelds wieder abfällt, wird der Arbeitskolben 54a durch die Kraft des Federelements 56a in Richtung der Ruhestellung bewegt. Der Magnetspule 52a ist dabei vorzugsweise eine nicht näher dargestellte Diodeneinheit vorgeschaltet, wodurch die Magnetspule 52a lediglich mit einer Halbwelle einer Wechselspannung bestromt wird. In dem dargestellten Ausführungsbeispiel ist die Magnetspule 52a für eine Wechselspannung von 230 V bei 50 Hz vorgesehen.

Die Pumpkammer 60a umfasst bei einem montierten Arbeitskolben 54a eine Vorkammer 88a, eine Druckkammer 90a und eine Auslasskammer 92a. Der Arbeitskolben 54a umfasst ein Kolbenventil 94a, das strömungstechnisch zwischen der Vorkammer 88a und der Druckkammer 90a angeordnet ist. Das Kolbenventil 94a ist bezogen auf eine Längsachse der Getränkepumpe 10a zentral in der Getränkepumpe 10a und zentral in dem Arbeitskolben 54a angeordnet. Das Kolbenventil 94a ist in Form eines Rückschlagventils ausgebildet, welches eine Durchlassrichtung von der Vorkammer 88a in die Druckkammer 90a aufweist. Das Kolbenventil 94a umfasst einen Ventilsitz, ein Verschlussteil und eine Schließfeder. Die Schließfeder ist dazu vorgesehen, das Verschlussteil auf den Ventilsitz zu ziehen. In einem Füllhub, bei dem der Arbeitskolben 54a durch das Magnetfeld entgegen der Kraft des als Pumpfeder ausgebildeten Federelements 56a bewegt wird, strömt Fluid von der Vorkammer 88a durch das Kolbenventil 94a in die Druckkammer 90a. In einem anschließenden Druckhub, bei dem der Arbeitskolben 54a durch die Kraft des Federelements 56a bewegt wird, wird das Fluid aus der Druckkammer 90a herausgedrückt. Der Maximaldruck, der dabei auf das Fluid wirkt, hängt insbesondere von der Kraft des Federelements 56a ab. Ein Weg, um den der Arbeitskolben 54a dabei bewegt wird, hängt von einer Ausgestaltung der Getränkepumpe 10a, insbesondere von der Form der Polhülsen 14a, 22a ab.

Die Getränkepumpe 10a weist zwei Anschlusselemente 96a, 98a auf. Ein erstes der Anschlusselemente 96a ist als ein Einlasselement ausgebildet und zu einem Anschluss an eine Wasserzuführung, beispielsweise an einen Wasservorratsbehälter, vorgesehen. Das erste Anschlusselement 96a weist einen Anschlussstutzen 100a zu einem Anschluss an einen Schlauch auf. Es ist denkbar, dass das erste Anschlusselement 96a eine Anschlusskupplung aufweist. Ein weiteres der Anschlusselemente 98a ist als ein Auslasselement ausgebildet und weist eine Anschlusskupplung 102a auf. Es ist denkbar, dass das weitere Anschlusselement 98a einen Anschlussstutzen aufweist.

Das weitere der Federelemente 58a ist als ein Dämpfungselement ausgebildet. Das weitere der Federelemente 58a ist in dem vorliegenden Ausführungsbeispiel als eine Schraubenfeder ausgebildet. Der Arbeitskolben 54a ist schwimmend zwischen den beiden Federelementen 56a, 58a gelagert. Der Arbeitskolben 54a ist zumindest im Wesentlichen ununterbrochen mit beiden Federelementen 56a, 58a in Kontakt. Es ist denkbar, dass das weitere der Federelemente 58a als ein anderes elastisches Element ausgebildet ist, beispielsweise als ein Balgelement und/oder als ein poröses Element. Die Getränkepumpe 10a umfasst einen Lagerring 104a für ein Dichtelement 106a. Das Dichtelement 106a ist zu einer Dichtung der Vorkammer 88a gegenüber der Druckkammer 90a vorgesehen. In einem montierten Zustand durchdringt der Arbeitskolben 54a den Lagerring 104a. Das Dichtelement 106a bildet zusammen mit dem Arbeitskolben 54a eine Gleitdichtung aus.

Die Getränkepumpe 10a umfasst ein Auslassventil 108a, das in der Auslasskammer 92a angeordnet ist. Die Auslasskammer 92a wird von dem weiteren Anschlusselement 98a ausgebildet. Das Auslassventil 108a ist strömungstechnisch zwischen der Druckkammer 90a und der Auslasskammer 92a der Getränkepumpe 10a angeordnet. Das Auslassventil 108a ist bezogen auf die Längsachse der Getränkepumpe 10a zentral in der Getränkepumpe 10a und zentral in der Auslasskammer 92a angeordnet. Die Auslasskammer 92a ist strömungstechnisch zwischen der Druckkammer 90a und einer Auslassöffnung angeordnet. Das Auslassventil 108a ist als ein Rückschlagventil ausgebildet, welches eine Durchlassrichtung von der Druckkammer 90a zu der Auslasskammer 92a aufweist. Das Druckkammerelement weist eine kreisförmige Öffnung auf, die einen Ventilsitz für das Auslassventil 108a ausbildet. Das Auslassventil 108a umfasst ein axial beweglich gelagertes Verschlussteil und eine Schließfeder, die in einem montierten Zustand das Verschlussteil gegen den Ventilsitz drückt.

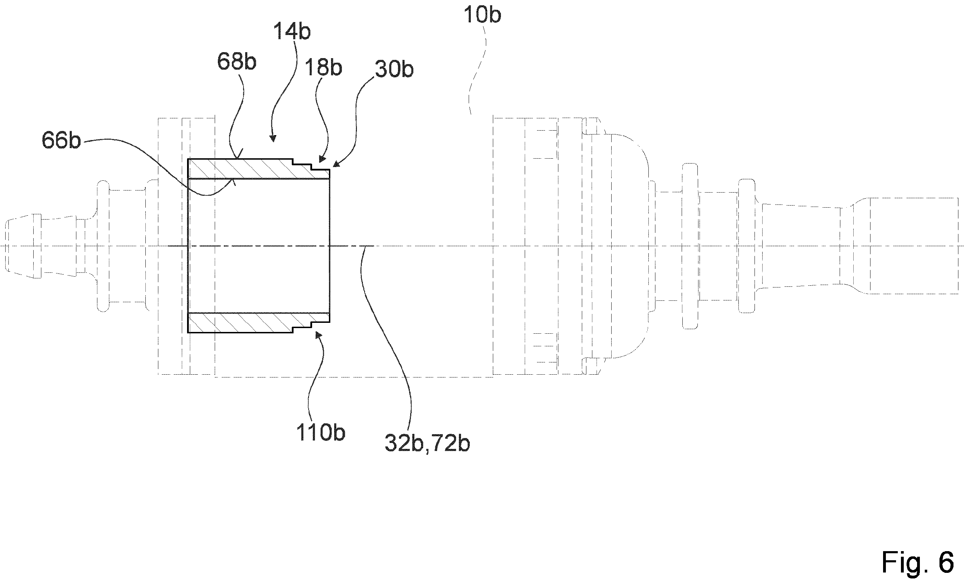

In den Figuren 6 bis 11 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 11 ist der Buchstabe a durch die Buchstaben b bis e ersetzt.

Figur 6 zeigt ein weiteres Ausführungsbeispiel einer Getränkepumpe 10b für ein Haushaltsgerät. Die Getränkepumpe 10b ist analog zu dem vorhergehenden Ausführungsbeispiel aufgebaut. Analog zu dem vorhergehenden Ausführungsbeispiel weist die Getränkepumpe 10b eine Polhülse 14b auf. Die Polhülse 14b ist zu einer Leitung eines von einem Magnetaktor erzeugten magnetischen Flusses vorgesehen. Die Polhülse 14b ist zumindest im Wesentlichen in Form eines Hohlzylinders ausgebildet. Die Polhülse 14b weist eine Mittelachse 32b auf, die einer Zylinderachse entspricht. Die Polhülse 14b weist einen Innenumfang 66b und einen Außenumfang 68b auf. In einem montierten Zustand ist die Polhülse 14b koaxial zu einer Pumpkammer der Getränkepumpe 10b angeordnet. Die Polhülse 14b ist in dem vorliegenden Ausführungsbeispiel rotationssymmetrisch ausgebildet. Die Polhülse 14b weist entlang einer Hauptströmungsrichtung der zu fördernden Flüssigkeit eine sich wesentlich verändernde magnetische Leitfähigkeit auf. Die Polhülse 14b weist analog zu dem vorhergehenden Ausführungsbeispiel ein axiales Schnittprofil auf, das in einem axialen Randbereich 18b eine verminderte Wandstärke aufweist. Der axiale Randbereich 18b ist an einem axialen Rand der Polhülse 14b angeordnet. Die Polhülse 14b weist an dem axialen Rand eine minimale Wandstärke auf. Die Polhülse 14b weist an dem axialen Rand eine minimale Wandstärke bezogen auf den Randbereich 18b auf.

Im Unterschied zu dem vorhergehenden Ausführungsbeispiel weist das axiale Schnittprofil eine mehrfache Stufung 30b auf. Die mehrfache Stufung 30b ist in dem axialen Randbereich 18b des axialen Schnittprofils angeordnet. Die mehrfache Stufung 30b legt den axialen Randbereich 18b fest. Das axiale Schnittprofil weist eine Symmetrieachse 72b auf. Das axiale Schnittprofil weist eine weitere mehrfache Stufung 110b auf, die bezogen auf die Symmetrieachse 72b symmetrisch zu der mehrfachen Stufung 30b ausgebildet und symmetrisch zu der mehrfachen Stufung 30b angeordnet ist. In dem vorliegenden Ausführungsbeispiel weisen die mehrfachen Stufungen 30b, 110b jeweils drei Stufen auf. Es ist denkbar, dass die mehrfachen Stufungen 30b, 110b eine von drei abweichende Anzahl von Stufen, beispielsweise zwei Stufen oder vier oder mehr Stufen aufweisen. Die Stufen weisen in dem vorliegenden Ausführungsbeispiel eine zumindest im Wesentlichen gleiche Stufenhöhe auf. Die Stufen sind in axialer Richtung gleichmäßig verteilt in dem axialen Randbereich 18b angeordnet. Es ist auch denkbar, dass die Stufen unterschiedliche Stufenhöhen aufweisen und/oder ungleichmäßig in axialer Richtung verteilt angeordnet sind.

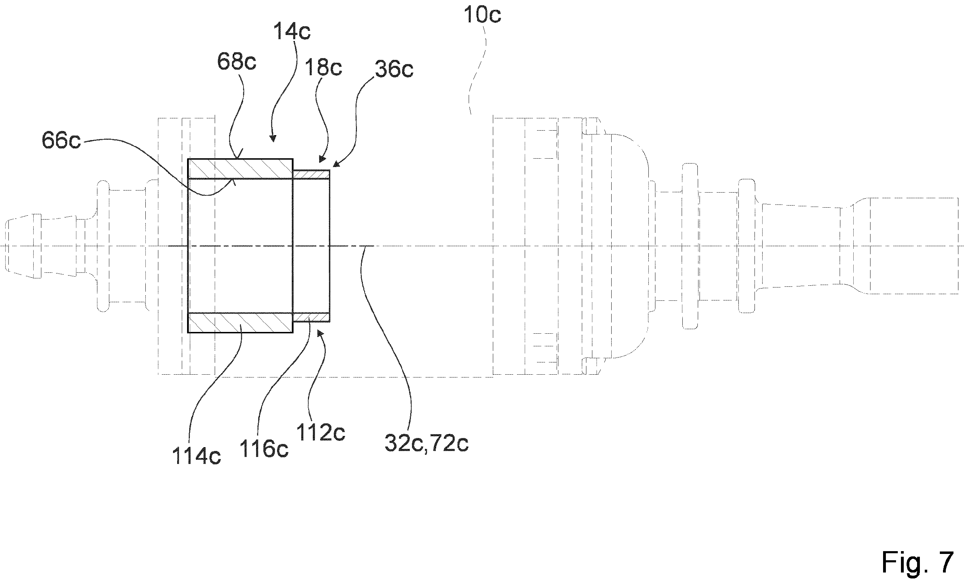

Figur 7 zeigt ein weiteres Ausführungsbeispiel einer Getränkepumpe 10c für ein Haushaltsgerät. Die Getränkepumpe 10c ist analog zu dem vorhergehenden Ausführungsbeispiel aufgebaut. Analog zu dem vorhergehenden Ausführungsbeispiel weist die Getränkepumpe 10c eine Polhülse 14c auf. Die Polhülse 14c ist zu einer Leitung eines von einem Magnetaktor erzeugten magnetischen Flusses vorgesehen. Die Polhülse 14c ist zumindest im Wesentlichen in Form eines Hohlzylinders ausgebildet. Die Polhülse 14c weist eine Mittelachse 32c auf, die einer Zylinderachse entspricht. Die Polhülse 14c weist einen Innenumfang 66c und einen Außenumfang 68c auf. In einem montierten Zustand ist die Polhülse 14c koaxial zu einer Pumpkammer der Getränkepumpe 10c angeordnet. Die Polhülse 14c ist in dem vorliegenden Ausführungsbeispiel rotationssymmetrisch ausgebildet. Die Polhülse 14c weist entlang einer Hauptströmungsrichtung der zu fördernden Flüssigkeit eine sich wesentlich verändernde magnetische Leitfähigkeit auf. Die Polhülse 14c weist analog zu dem vorhergehenden Ausführungsbeispiel ein axiales Schnittprofil auf, das in einem axialen Randbereich 18c eine verminderte Wandstärke aufweist. Der axiale Randbereich 18c ist an einem axialen Rand der Polhülse 14c angeordnet. Die Polhülse 14c weist an dem axialen Rand eine minimale Wandstärke auf. Die Polhülse 14c weist an dem axialen Rand eine minimale Wandstärke bezogen auf den Randbereich 18c auf.

Im Unterschied zu dem vorhergehenden Ausführungsbeispiel weist das axiale Schnittprofil zumindest einen Abschnitt 36c mit einer konstanten, verminderten Wandstärke auf, der eine axiale Erstreckung von wenigstens 2 mm aufweist. Der Abschnitt 36c mit der konstanten, verminderten Wandstärke weist in dem vorliegenden Ausführungsbeispiel eine axiale Erstreckung von höchstens 10 mm auf. Der Abschnitt 36c mit der konstanten, verminderten Wandstärke weist eine axiale Erstreckung von zumindest im Wesentlichen 4,7 mm auf. Der Abschnitt 36c mit der konstanten, verminderten Wandstärke ist in dem axialen Randbereich 18c angeordnet. Der Abschnitt 36c mit der konstanten, verminderten Wandstärke legt den axialen Randbereich 18c fest.

Das axiale Schnittprofil weist eine Symmetrieachse 72c auf. Das axiale Schnittprofil weist einen weiteren Abschnitt 112c mit einer konstanten, verminderten Wandstärke auf. Der weitere Abschnitt 112c ist symmetrisch zu dem Abschnitt 36c mit der konstanten, verminderten Wandstärke ausgebildet und symmetrisch zu dem Abschnitt 36c mit der konstanten, verminderten Wandstärke angeordnet. Die Abschnitte 36c, 112c des axialen Schnittprofils mit einer konstanten, verminderten Wandstärke sind jeweils rechteckig ausgebildet. In dem vorliegenden Ausführungsbeispiel ist das axiale Schnittprofil aus Rechtecken zusammengesetzt.

In dem vorliegenden Ausführungsbeispiel ist die Polhülse 14c mehrteilig ausgebildet. Die Polhülse 14c weist zwei Hülsenelemente 114c, 116c auf, die jeweils als ein Hohlzylinder ausgebildet sind. Die Hülsenelemente 114c, 116c sind in einem montierten Zustand konzentrisch zueinander angeordnet. Die Hülsenelemente 114c, 116c sind in einem montierten Zustand fluchtend zueinander angeordnet. Die Hülsenelemente 114c, 116c weisen einen gleichen Innendurchmesser auf. Ein erstes der Hülsenelemente 114c weist eine Grundwandstärke der Polhülse 14c auf. Ein weiteres der Hülsenelemente 116c weist eine Wandstärke auf, die gegenüber der Grundwandstärke vermindert ist. Das weitere der Hülsenelemente 116c weist einen Außendurchmesser auf, der kleiner ist als ein Außendurchmesser des ersten Hülsenelements 114c.

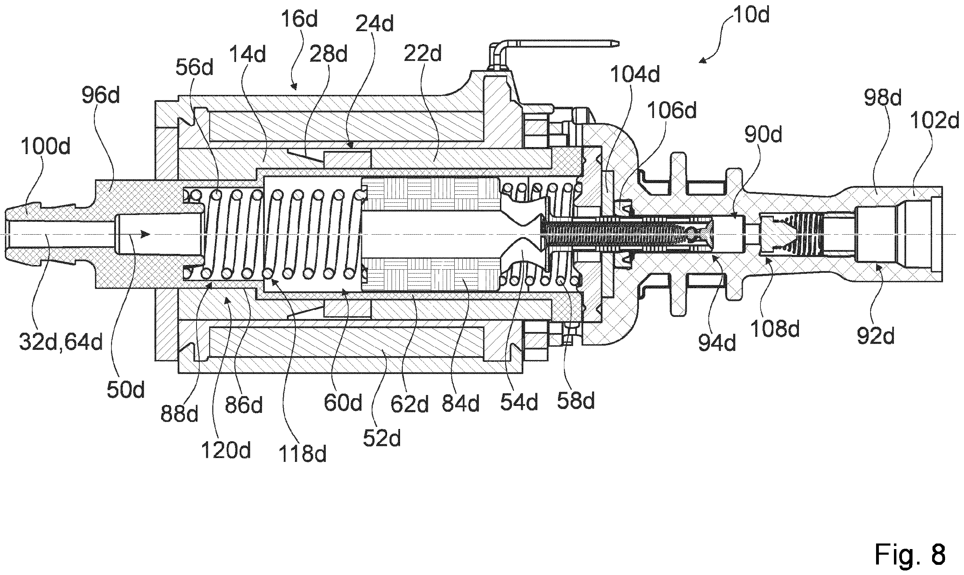

Figur 8 zeigt ein weiteres Ausführungsbeispiel einer Getränkepumpe 10d für ein Haushaltsgerät. Die Getränkepumpe 10d ist analog zu dem vorhergehenden Ausführungsbeispiel aufgebaut. Analog zu dem vorhergehenden Ausführungsbeispiel weist die Getränkepumpe 10d eine Polhülse 14d auf. Die Polhülse 14d ist zu einer Leitung eines von einem Magnetaktor 16d erzeugten magnetischen Flusses vorgesehen. Die Polhülse 14d ist zumindest im Wesentlichen in Form eines Hohlzylinders ausgebildet. Die Polhülse 14d weist eine Mittelachse 32d auf, die einer Zylinderachse entspricht. Die Polhülse 14d weist einen Innenumfang 66d und einen Außenumfang 68d auf. In einem montierten Zustand ist die Polhülse 14d koaxial zu einer Pumpkammer 60d der Getränkepumpe 10d angeordnet. Die Polhülse 14d ist in dem vorliegenden Ausführungsbeispiel rotationssymmetrisch ausgebildet. Die Polhülse 14d weist entlang einer Hauptströmungsrichtung der zu fördernden Flüssigkeit eine sich wesentlich verändernde magnetische Leitfähigkeit auf. analog zu dem vorhergehenden Ausführungsbeispiel ein axiales Schnittprofil auf, das in einem axialen Randbereich 18d eine verminderte Wandstärke aufweist. Der axiale Randbereich 18d ist an einem axialen Rand der Polhülse 14d angeordnet. Die Polhülse 14d weist an dem axialen Rand eine minimale Wandstärke auf. Die Polhülse 14d weist an dem axialen Rand eine minimale Wandstärke bezogen auf den Randbereich 18d auf.

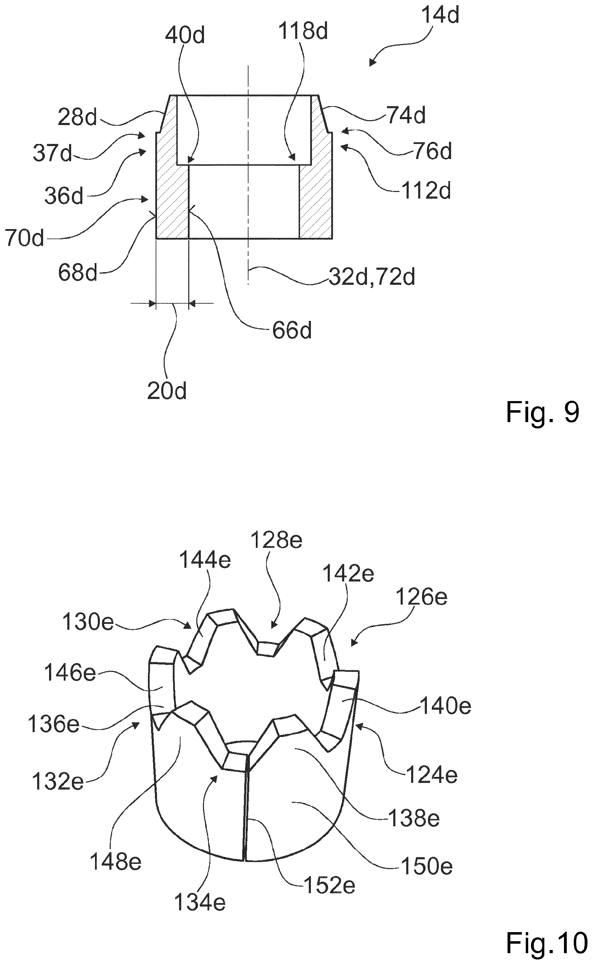

Die Polhülse 14d weist eine Grundwandstärke 20d auf, gegenüber der die Wandstärke in dem axialen Randbereich 18d vermindert ist (vgl. Figur 9). Die Wandstärke ist in dem axialen Randbereich 18d überall kleiner als die Grundwandstärke 20d. Die Polhülse 14d weist an einem dem axialen Randbereich 18d abgewandten Rand der Polhülse 14d einen weiteren Bereich 70d auf, in dem die Wandstärke durchgängig der Grundwandstärke 20d entspricht. Die Wandstärke ist in dem weiteren Bereich 70d zumindest im Wesentlichen konstant. Der weitere Bereich 70d weist eine axiale Erstreckung auf, die zumindest im Wesentlichen 60 % einer axialen Gesamterstreckung der Polhülse 14d entspricht. Das axiale Schnittprofil weist einen Abschnitt 36d mit einer konstanten, verminderten Wandstärke auf, der eine axiale Erstreckung von wenigstens 2 mm aufweist. Das axiale Schnittprofil weist in dem weiteren Bereich 70d ein Rechteck auf. Das axiale Schnittprofil weist in dem Abschnitt 36d ein Rechteck auf. Die Grundwandstärke 20d entspricht einer maximalen Wandstärke der Polhülse 14d. Die Grundwandstärke 20d weist in dem vorliegenden Ausführungsbeispiel einen Wert von zumindest im Wesentlichen 3,5 mm auf.

Der Eisenkreis weist analog zu den vorhergehenden Ausführungsbeispielen eine weitere Polhülse 22d auf, die von der Polhülse 14d durch einen Spalt 24d beabstandet angeordnet ist. Der Spalt 24d ist als ein magnetisch isolierender Spalt 24d ausgebildet und weist in dem vorliegenden Ausführungsbeispiel ein nicht-magnetisierbares Material auf. Die Polhülse 14d und die weitere Polhülse 22d schließen den magnetisch isolierenden Spalt 24d in axialer Richtung zwischen sich ein. Der magnetisch isolierende Spalt 24d unterbricht den Eisenkreis. In einem montierten Zustand begrenzt der axiale Rand des axialen Randbereichs 18d den magnetisch isolierenden Spalt 24d des Eisenkreises. Der magnetisch isolierende Spalt 24d ist räumlich axial zwischen der Polhülse 14d und der weiteren Polhülse 22d angeordnet. Der axiale Randbereich 18d der Polhülse 14d ist auf einer dem magnetisch isolierenden Spalt 24d zugewandten Seite der Polhülse 14d angeordnet. Die weitere Polhülse 22d weist eine Grundwandstärke auf, die der Wandstärke des Abschnitts 36d der Polhülse 14d entspricht.

Das axiale Schnittprofil weist zumindest ein Schräge 28d auf. Die Schräge 28d ist in dem axialen Randbereich 18d des axialen Schnittprofils angeordnet. Die Schräge 28d legt den axialen Randbereich 18d fest. Das axiale Schnittprofil weist in dem vorliegenden Ausführungsbeispiel eine Symmetrieachse 72d auf. Das axiale Schnittprofil weist bezogen auf die Symmetrieachse 72d eine weitere Schräge 74d auf, die symmetrisch zu der Schräge 28d ausgebildet und symmetrisch zu der Schräge 74d angeordnet ist. Die Schrägen 28d, 74d erstrecken sich in axialer Richtung zumindest im Wesentlichen über den gesamten axialen Randbereich 18d. Die Polhülse 14d weist an einem dem magnetisch isolierenden Spalt 24d zugewandten Rand eine durch die Schrägen 28d, 74d gebildete Fase auf. Die Schrägen 28d, 74d sind an einem Außenumfang 68d des axialen Randbereichs 18d angeordnet. Das axiale Schnittprofil ist analog zu den vorhergehenden Ausführungsbeispielen von einer Kraft-Weg-Kennlinie abgeleitet. Der axiale Randbereich 18d weist eine axiale Erstreckung mit einem Wert von wenigstens 2 mm auf. In dem vorliegenden Ausführungsbeispiel weist der axiale Randbereich 18d eine axiale Erstreckung von zumindest im Wesentlichen 7 mm auf. Die Schrägen 28d, 74d des axialen Schnittprofils schließen jeweils mit der Mittelachse 32d einen Winkel von zumindest im Wesentlichen 15 Grad ein.

Das axiale Schnittprofil umfasst zumindest eine Stufe 37d, die eine Höhe von zumindest im Wesentlichen 0,5 mm aufweist. Das axiale Schnittprofil umfasst eine weitere Stufe 76d, die bezogen auf die Symmetrieachse 72d symmetrisch zu der Stufe 37d ausgebildet und symmetrisch zu der Stufe 37d angeordnet ist. Die Stufen 37d, 76d sind an dem Außenumfang 68d der Polhülse 14d angeordnet. Jeweils eine der Schrägen 28d, 74d ist räumlich zwischen einer der Stufen 37d, 76d und dem Rand der Polhülse 14d angeordnet. Das axiale Schnittprofil weist einen weiteren Abschnitt 112d mit einer konstanten, verminderten Wandstärke auf, der bezogen auf die Symmetrieachse 72d symmetrisch zu dem Abschnitt 36d mit einer konstanten, verminderten Wandstärke ausgebildet und symmetrisch zu dem Abschnitt 36d mit einer konstanten, verminderten Wandstärke angeordnet ist. Im Unterschied zu den vorhergehenden Ausführungsbeispielen weist das axiale Schnittprofil an dem Innenumfang 66d zumindest eine Stufe 40d auf. Das axiale Schnittprofil umfasst an dem Innenumfang 66d eine weitere Stufe 118d, die bezogen auf die Symmetrieachse 72d symmetrisch zu der Stufe 40d ausgebildet und symmetrisch zu der Stufe 40d angeordnet ist. Die an dem Innenumfang 66d angeordneten Stufen 40d, 118d begrenzen den axialen Randbereich 18d. Die an dem Innenumfang 66d angeordneten Stufen 40d, 118d begrenzen jeweils einen der Abschnitte 36d, 112d.

In einer alternativen Ausgestaltung kann die Polhülse 14d mehrteilig, beispielsweise zweiteilig ausgebildet sein. Die Polhülse 14d weist dann ein äußeres Hülsenelement und ein inneres Hülsenelement auf. Die Hülsenelemente sind in einem montierten Zustand konzentrisch zueinander angeordnet. Das äußere Hülsenelement umgibt das innere Hülsenelement zumindest im Wesentlichen vollständig. Das innere Hülsenelement weist eine Wandstärke auf, die einer Stufenhöhe der an dem Innenumfang 66d der Polhülse 14d angeordneten Stufen 40d, 118d entspricht. Eine axiale Erstreckung des inneren Hülsenelements entspricht einer axialen Erstreckung des weiteren Bereichs 70d, in dem die Wandstärke der Polhülse 14d durchgängig der Grundwandstärke 20d entspricht.

Der Arbeitskolben 54d der Getränkepumpe 10d umfasst analog zu den vorhergehenden Ausführungsbeispielen ein Ankerelement 84d, das vollständig aus einem magnetisierbaren Material besteht. Im Unterschied zu den vorhergehenden Ausführungsbeispielen weist die Getränkepumpe 10d kein in der Pumpkammer 60d angeordnetes Flussleitelement auf. Die Pumpkammer 60d umfasst bei montiertem Arbeitskolben 54d eine Vorkammer 88d, eine Druckkammer 90d und eine Auslasskammer 92d. Der Arbeitskolben 54d umfasst ein Kolbenventil 94d, das strömungstechnisch zwischen der Vorkammer 88d und der Druckkammer 90d angeordnet ist. Die Getränkepumpe 10d umfasst ein Auslassventil 108d, das in der Auslasskammer 92d angeordnet ist. Im Unterschied zu den vorhergehenden Ausführungsbeispielen weicht die Pumpkammer 60d in einem Bereich der Polhülse 14d von einer Zylinderform ab. Die Pumpkammer 60d weist einen Abschnitt 120d mit einem verminderten Innendurchmesser auf. Der Abschnitt 120d ist in einem montierten Zustand bezogen auf eine Richtung der Mittelachse 64d in einer gleichen Höhe wie der weitere Bereich 70d der Polhülse 14d angeordnet. Eine axiale Erstreckung des Abschnitts 120d und des weiteren Bereichs 70d entsprechen einander. Die Pumpkammer 60d weist eine radiale Stufe auf, die der Stufe 40d der Polhülse 14d entspricht. In dem vorliegenden Ausführungsbeispiel ist ein minimaler Innendurchmesser der Polhülse 14d in dem weiteren Bereich 70d kleiner als ein maximaler Durchmesser des Ankerelements 84d. Es ist auch denkbar, dass der minimale Innendurchmesser der Polhülse 14d gleich oder kleiner ist als der maximale Durchmesser des Ankerelements 84d.

Die Getränkepumpe 10d weist zwei Anschlusselemente 96d, 98d auf. Ein erstes der Anschlusselemente 96d ist als ein Einlasselement ausgebildet und zu einem Anschluss an eine Wasserzuführung, beispielsweise an einen Wasservorratsbehälter, vorgesehen. Das erste Anschlusselement 96d weist einen Anschlussstutzen 100d zu einem Anschluss an einen Schlauch auf. Ein weiteres der Anschlusselemente 98d ist als ein Auslasselement ausgebildet und weist eine Anschlusskupplung 102d auf. Das weitere der Federelemente 58d ist als ein Dämpfungselement ausgebildet. Der Arbeitskolben 54d ist schwimmend zwischen den beiden Federelementen 56d, 58d gelagert. Die Getränkepumpe 10d umfasst einen Lagerring 104d für ein Dichtelement 106d. Das Dichtelement 106d ist zu einer Dichtung der Vorkammer 88d gegenüber der Druckkammer 90d vorgesehen.

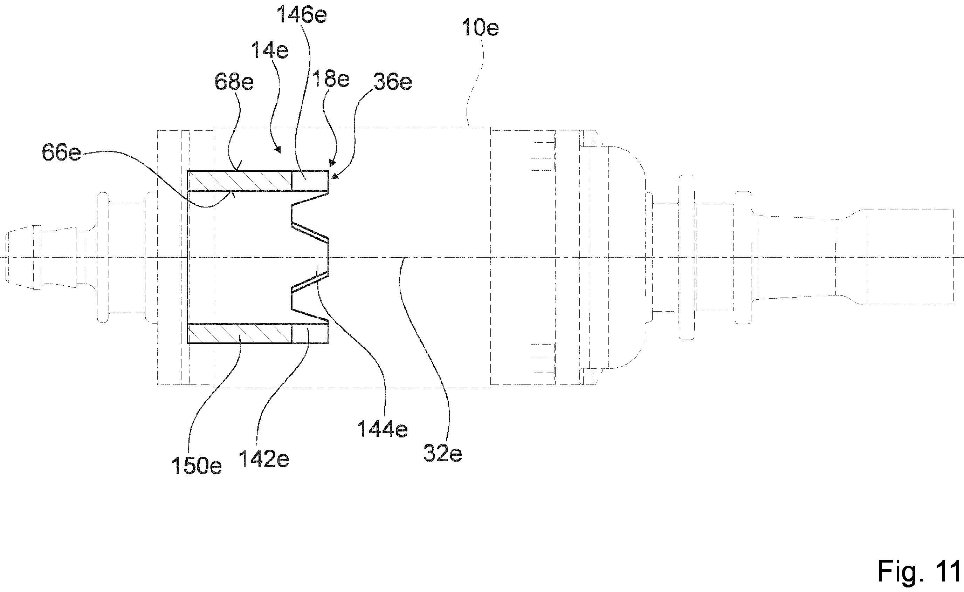

Figur 11 zeigt ein weiteres Ausführungsbeispiel einer Getränkepumpe 10e für ein Haushaltsgerät. Die Getränkepumpe 10e ist analog zu den vorhergehenden Ausführungsbeispielen aufgebaut. Analog zu den vorhergehenden Ausführungsbeispielen weist die Getränkepumpe 10e eine Polhülse 14e auf. Die Polhülse 14e ist zu einer Leitung eines von einem Magnetaktor erzeugten magnetischen Flusses vorgesehen. Die Polhülse 14e ist zumindest im Wesentlichen in Form eines Hohlzylinders ausgebildet. Die Polhülse 14e weist eine Mittelachse 32e auf, die einer Zylinderachse entspricht. Die Polhülse 14e weist einen Innenumfang 66e und einen Außenumfang 68e auf. In einem montierten Zustand ist die Polhülse 14e koaxial zu einer Pumpkammer der Getränkepumpe 10e angeordnet. Die Polhülse 14e weist entlang einer Hauptströmungsrichtung der zu fördernden Flüssigkeit eine sich wesentlich verändernde magnetische Leitfähigkeit auf. Die Polhülse 14e weist in einem axialen Randbereich 18e eine verminderte magnetische Leitfähigkeit auf. Die Polhülse 14e weist in dem axialen Randbereich 18e ein vermindertes wirksames Wandmaterialvolumen auf.

Im Unterschied zu den vorhergehenden Ausführungsbeispielen ist der axiale Randbereich 18e gebuchtet ausgebildet. Die Polhülse 14e weist in dem axialen Randbereich 18e eine Mehrzahl von Einschnitten 124e-134e auf. Die Polhülse 14e weist in dem vorliegenden Ausführungsbeispiel sechs Einschnitte 124e-134e auf. Die Einschnitte 124e-134e sind regelmäßig in Umfangsrichtung verteilt angeordnet. Die Einschnitte 124e-134e weisen einen Winkelabstand zu einem jeweils benachbart angeordneten Einschnitt 124e-134e von zumindest im Wesentlichen 60 Grad auf. Es ist denkbar, dass die Polhülse 14e eine kleinere Zahl von Einschnitten 124e-134e, beispielsweise drei oder vier Einschnitte aufweist. Es ist denkbar, dass die Polhülse 14e eine größere Zahl von Einschnitten 124e-134e, beispielsweise wenigstens 7, 8, 9, 10 oder 100 Einschnitte aufweist. Es ist denkbar, dass der axiale Randbereich 18e der Polhülse 14e kammartig ausgebildet ist. In dem vorliegenden Ausführungsbeispiel sind die Einschnitte 124e-134e trapezförmig ausgebildet. Die Einschnitte 124e-134e weisen jeweils ein Tiefe von zumindest im Wesentlichen 5 mm auf. Das Wandmaterialvolumen der Polhülse 14e ist in dem axialen Randbereich 18e um ein Gesamtvolumen der Einschnitte 124e-134e vermindert. Die Einschnitte 124e-134e sind in dem vorliegenden Ausführungsbeispiel analog zueinander ausgebildet. Die Einschnitte 124e-134e sind in dem vorliegenden Ausführungsbeispiel aus einer Wand 136e der Polhülse 14e ausgestanzt. Es ist denkbar, dass die Einschnitte unterschiedlich ausgebildet sind, und dass die Polhülse 14e beispielsweise zwei oder mehr Formen unterschiedlicher Einschnitte aufweist. Die Einschnitte 124e-134e sind jeweils paarweise einander gegenüberliegend angeordnet. Die Polhülse 14e ist kronenförmig ausgebildet.

Die Polhülse 14e weist in dem vorliegenden Ausführungsbeispiel sechs Zähne 138e-148e auf (vgl. Figur 10). Es ist denkbar, dass die Polhülse 14e eine von sechs abweichende Zahl von Zähnen aufweist. Die Zähne 138e-148e sind in axialer Richtung ausgerichtet und ragen in axialer Richtung über einen Grundkörper 150e der Polhülse 14e hinaus. Die Zähne 138e-148e weisen jeweils eine Höhe von zumindest im Wesentlichen 5 mm auf. Die Zähne 138e-148e sind analog zueinander ausgebildet und gleichmäßig in Umfangsrichtung verteilt angeordnet. Die Zähne 138e-148e weisen einen Winkelabstand zu einem jeweils benachbart angeordneten Zahn von zumindest im Wesentlichen 60 Grad auf. Es ist denkbar, dass die Zähne 138e-148e in einer anderen dem Fachmann sinnvoll erscheinenden Weise entlang der Umfangsrichtung angeordnet sind. Die Zähne 138e-148e sind jeweils trapezförmig ausgebildet. Es ist denkbar, dass die Einschnitte 124e-134e in einer alternativen Ausgestaltung wellenförmig ausgebildet sind. Die Polhülse 14e ist geschlitzt ausgebildet und weist einen Schlitz 152e auf, der die Wand 136e der Polhülse in axialer und radialer Richtung vollständig durchdringt.

### Bezugszeichen

- 10: Getränkepumpe
- 12: Haushaltsgerät
- 14: Polhülse
- 16: Magnetaktor
- 18: Randbereich
- 20: Grundwandstärke
- 22: Polhülse
- 24: Spalt
- 28: Schräge
- 30: Stufung
- 32: Mittelachse
- 34: Winkel
- 36: Abschnitt
- 37: Stufe
- 38: Innendurchmesser
- 40: Stufe
- 42: Bedieneinheit
- 44: Abstellrost
- 46: Gefäßaufnahme
- 48: Ausgabeeinheit
- 50: Hauptströmungsrichtung
- 52: Magnetspule
- 54: Arbeitskolben
- 56: Federelement
- 58: Federelement
- 60: Pumpkammer
- 62: Pumpkammerwand
- 64: Mittelachse
- 66: Innenumfang
- 68: Außenumfang
- 70: Bereich
- 72: Symmetrieachse
- 74: Schräge
- 76: Stufe
- 78: Stirnfläche
- 80: Stirnfläche
- 82: Stirnfläche
- 84: Ankerelement
- 86: Flussleitelement
- 88: Vorkammer
- 90: Druckkammer
- 92: Auslasskammer
- 94: Kolbenventil
- 96: Anschlusselement
- 98: Anschlusselement
- 100: Anschlussstutzen
- 102: Anschlusskupplung
- 104: Lagerring
- 106: Dichtelement
- 108: Auslassventil
- 110: Stufung
- 112: Abschnitt
- 114: Hülsenelement
- 116: Hülsenelement
- 118: Stufe
- 120: Abschnitt
- 122: Fase
- 124: Einschnitt
- 126: Einschnitt
- 128: Einschnitt
- 130: Einschnitt
- 132: Einschnitt
- 134: Einschnitt
- 136: Wand
- 138: Zahn
- 140: Zahn
- 142: Zahn
- 144: Zahn
- 146: Zahn
- 148: Zahn
- 150: Grundkörper
- 152: Schlitz

## Patentansprüche

1. Haushaltsgerät, insbesondere Getränkeautomat, mit einer Getränkepumpe (10a; 10b; 10c; 10d; 10e) zu einer Förderung einer Flüssigkeit, wobei die Getränkepumpe zumindest eine Polhülse (14a; 14b; 14c; 14d; 14e) zu einer Leitung eines von einem Magnetaktor (16a; 16d) erzeugten magnetischen Flusses aufweist, **dadurch gekennzeichnet, dass** die Polhülse (14a; 14b; 14c; 14d; 14e) entlang einer Hauptströmungsrichtung (50a) der Flüssigkeit eine sich wesentlich verändernde magnetische Leitfähigkeit aufweist, wobei die Polhülse (14a; 14b; 14c; 14d; 14e) in einem axialen Randbereich (18a; 18b; 18c; 18d; 18e) eine verminderte magnetische Leitfähigkeit aufweist.

2. Haushaltsgerät nach Anspruch 1, **dadurch gekennzeichnet, dass** die Polhülse (14a; 14b; 14c; 14d; 14e) in dem axialen Randbereich (18a; 18b; 18c; 18d; 18e) ein vermindertes wirksames Wandmaterialvolumen aufweist.

3. Haushaltsgerät nach Anspruch 1 oder 2, **dadurch gekennzeichnet, dass** der axiale Randbereich (18e) der Polhülse (14e), gebuchtet ausgebildet ist.

4. Haushaltsgerät nach einem der vorhergehenden Ansprüche, **dadurch gekennzeichnet, dass** die Polhülse (14a; 14b; 14c; 14d) in dem axialen Randbereich (18a; 18b; 18c; 18d) eine verminderte Wandstärke aufweist.

5. Haushaltsgerät nach einem der vorhergehenden Ansprüche, **dadurch gekennzeichnet, dass** die Polhülse (14a; 14b; 14c; 14d) eine Grundwandstärke (20a; 20d) aufweist, gegenüber der die Wandstärke in dem axialen Randbereich (18a; 18b; 18c; 18d) vermindert ist.

6. Haushaltsgerät nach einem der vorhergehenden Ansprüche, **dadurch gekennzeichnet, dass** die Getränkepumpe zumindest eine weitere Polhülse (22a; 22d) aufweist, die von der Polhülse (14a; 14b; 14c; 14d; 14e) durch einen Spalt (24a; 24d) beabstandet angeordnet ist.

7. Haushaltsgerät nach einem der vorhergehenden Ansprüche, **dadurch gekennzeichnet, dass** die Polhülse (14a; 14b; 14c; 14d) ein axiales Schnittprofil aufweist, das von einer Kraft-Weg-Kennlinie abgeleitet ist.

8. Haushaltsgerät nach Anspruch 7, **dadurch gekennzeichnet, dass** das axiale Schnittprofil zumindest eine Schräge (28a; 28d) und/oder eine mehrfache Stufung (30b) aufweist.

9. Haushaltsgerät nach einem der vorhergehenden Ansprüche, **dadurch gekennzeichnet, dass** der axiale Randbereich (18a; 18b; 18c; 18d; 18e) eine axiale Erstreckung mit einem Wert von wenigstens 2 mm aufweist.

10. Haushaltsgerät nach einem der vorhergehenden Ansprüche, **dadurch gekennzeichnet, dass** der axiale Randbereich (18a; 18b; 18c; 18d; 18e) eine axiale Erstreckung mit einem Wert von höchstens 10 mm aufweist.

11. Haushaltsgerät nach Anspruch 7, **dadurch gekennzeichnet, dass** das axiale Schnittprofil eine Schräge (28a; 28d) aufweist, die mit einer Mittelachse (32a; 32d) der Polhülse (14a; 14d) einen Winkel (34a) von höchstens 30 Grad einschließt.

12. Haushaltsgerät nach Anspruch 7, **dadurch gekennzeichnet, dass** das axiale Schnittprofil einen Abschnitt (36c; 36d) mit einer konstanten, verminderten Wandstärke aufweist, der eine axiale Erstreckung von wenigstens 2 mm aufweist.

13. Haushaltsgerät nach Anspruch 7, **dadurch gekennzeichnet, dass** das axiale Schnittprofil eine Stufe umfasst (37a; 37c; 37d), die eine Höhe von wenigstens 0,2 mm aufweist.

14. Haushaltsgerät nach einem der vorhergehenden Ansprüche, **dadurch gekennzeichnet, dass** die Polhülse (14a; 14b; 14c; 14d) in dem axialen Randbereich (18a; 18b; 18c; 18d) einen konstanten Innendurchmesser (38a) aufweist.

15. Haushaltsgerät nach Anspruch 7, **dadurch gekennzeichnet, dass** das axiale Schnittprofil an einem Innenumfang (66d) eine Stufe (40d) aufweist.

## Claims

1. Domestic appliance, in particular beverage dispenser machine, with a beverage pump (10a; 10b; 10c; 10d; 10e) for conveying a liquid, wherein the beverage pump comprises at least one pole sleeve (14a; 14b, 14c; 14d; 14e) for conducting a magnetic flux generated by a magnetic actuator (16a; 16d),
**characterised in that,** along a main flow direction (50a) of the liquid, the pole sleeve (14a; 14b, 14c; 14d; 14e) has a substantially changing magnetic permeability, the pole sleeve (14a; 14b, 14c; 14d; 14e) having a reduced magnetic permeability in an axial edge region (18a; 18b, 18c; 18d; 18e).

2. Domestic appliance according to claim 1,
**characterised in that** the pole sleeve (14a; 14b, 14c; 14d; 14e) has a reduced effective wall material volume in its axial edge region (18a; 18b, 18c; 18d; 18e).

3. Domestic appliance according to claim 1 or 2,
**characterised in that** the axial edge region (18e) of the pole sleeve (14e) is embodied in a sinuate manner.

4. Domestic appliance according to one of the preceding claims,
**characterised in that** in the axial edge region (18a; 18b, 18c; 18d) the pole sleeve (14a; 14b, 14c; 14d) has a reduced wall thickness.

5. Domestic appliance according to one of the preceding claims,
**characterised in that** the pole sleeve (14a; 14b, 14c; 14d) has a basis wall thickness (20a; 20d) relative to which the wall thickness is reduced in the axial edge region (18a; 18b, 18c; 18d).

6. Domestic appliance according to one of the preceding claims,
**characterised in that** the beverage pump comprises at least one further pole sleeve (22a; 22d), which is arranged spaced apart from the pole sleeve (14a; 14b, 14c; 14d; 14e) by a gap (24a; 24d).

7. Domestic appliance according to one of the preceding claims,
**characterised in that** the pole sleeve (14a; 14b, 14c; 14d) has an axial section profile that is derived from a force-displacement characteristic.

8. Domestic appliance according to claim 7,
**characterised in that** the axial section profile comprises at least one slope (28a; 28d) and/or a multiple stepping (30b).

9. Domestic appliance according to one of the preceding claims,
**characterised in that** the axial edge region (18a; 18b, 18c; 18d; 18e) has an axial extension with a value of at least 2 mm.

10. Domestic appliance according to one of the preceding claims,
**characterised in that** the axial edge region (18a; 18b, 18c; 18d; 18e) has an axial extension with a value of maximally 10 mm.

11. Domestic appliance according to claim 7,
**characterised in that** the axial section profile comprises a slope (28a; 28d) which includes an angle (34a) of maximally 30 degrees with a middle axis (32a; 32d) of the pole sleeve (14a; 14d).

12. Domestic appliance according to claim 7,
**characterised in that** the axial section profile comprises a section (36c; 36d) with a constant, reduced wall thickness and with an axial extension of at least 2 mm.

13. Domestic appliance according to claim 7,
**characterised in that** the axial section profile comprises a step (37a; 37c; 37d) having a height of at least 0.2 mm.

14. Domestic appliance according to one of the preceding claims,
**characterised in that** the pole sleeve (14a; 14b, 14c; 14d) has a constant inner diameter (38a) in the axial edge region (18a; 18b, 18c; 18d).

15. Domestic appliance according to claim 7,
**characterised in that** the axial section profile comprises a step (40d) on an inner perimeter (66d).

## Revendications

1. Appareil ménager, notamment machine à boissons, avec une pompe de boissons (10a ; 10b, 10c ; 10d ; 10e) pour convoyer un liquide,
la pompe de boissons comportant au moins un épanouissement polaire (14a ; 14b ; 14c ; 14d ; 14e) pour conduire un flux magnétique généré par un actionneur magnétique (16a ; 16d),
**caractérisé en ce que** l'épanouissement polaire (14a ; 14b ; 14c ; 14d ; 14e) comporte, le long d'une direction principale de flux du liquide (50a), une perméabilité magnétique substantiellement changeante,
l'épanouissement polaire (14a ; 14b ; 14c ; 14d ; 14e) ayant une perméabilité magnétique réduite dans une zone périphérique axiale (18a ; 18b ; 18c ; 18d ; 18e).

2. Appareil ménager selon la revendication 1,
**caractérisé en ce que** dans la zone périphérique axiale (18a ; 18b ; 18c ; 18d ; 18e) l'épanouissement polaire (14a ; 14b ; 14c ; 14d ; 14e) comporte un volume réduit de matériau de paroi.

3. Appareil ménager selon l'une quelconque des revendications 1 ou 2,
**caractérisé en ce que** la zone périphérique axiale (18e) de l'épanouissement polaire 14e) est réalisé à être sinuée.

4. Appareil ménager selon l'une quelconque des revendications précédentes,
**caractérisé en ce que** dans la zone périphérique axiale (18a ; 18b ; 18c ; 18d) l'épanouissement polaire (14a ; 14b ; 14c ; 14d) comporte une épaisseur de paroi réduite.

5. Appareil ménager selon l'une quelconque des revendications précédentes,
**caractérisé en ce que** l'épanouissement polaire (14a ; 14b ; 14c ; 14d) comporte une épaisseur de paroi basique (20a ; 20d) par rapport de laquelle l'épaisseur de paroi dans la zone périphérique axiale (18a ; 18b ; 18c ; 18d) est réduite.

6. Appareil ménager selon l'une quelconque des revendications précédentes,
**caractérisé en ce que** la pompe de boissons comporte au moins un épanouissement polaire de plus (22a ; 22d) qui est agencé espacé de l'épanouissement polaire (14a ; 14b ; 14c ; 14d ; 14e) par une fente (24a ; 24d).

7. Appareil ménager selon l'une quelconque des revendications précédentes,
**caractérisé en ce que** l'épanouissement polaire (14a ; 14b ; 14c ; 14d) comporte un profil de coupe axial qui est dérivé d'une caractéristique force-déplacement.

8. Appareil ménager selon la revendication 7,
**caractérisé en ce que** le profil de coupe axial comporte au moins une pente (28a ; 28d) et/ou un échelonnage multiple (30b).

9. Appareil ménager selon l'une quelconque des revendications précédentes,
**caractérisé en ce que** la zone périphérique axiale (18a ; 18b ; 18c ; 18d ; 18e) comporte une extension axiale ayant une valeur d'au moins 2 mm.

10. Appareil ménager selon l'une quelconque des revendications précédentes,
**caractérisé en ce que** la zone périphérique axiale (18a ; 18b ; 18c ; 18d ; 18e) comporte une extension axiale ayant une valeur d'au plus 10 mm.

11. Appareil ménager selon la revendication 7,
**caractérisé en ce que** le profil de coupe axial comporte une pente (28a ; 28d) incluant un angle (34a) de maximalement 30 degrés avec un axe central (32a ; 32d) de l'épanouissement polaire (14a ; 14d).

12. Appareil ménager selon la revendication 7,
**caractérisé en ce que** le profil de coupe axial comporte une section (36c ; 36d) ayant une épaisseur de paroi constante et réduite et ayant une extension axiale d'au moins 2 mm.

13. Appareil ménager selon la revendication 7,
**caractérisé en ce que** le profil de coupe axial comporte un échelon (37a ; 37c ; 37d) ayant une hauteur d'au moins 0,2 mm.

14. Appareil ménager selon l'une quelconque des revendications précédentes,
**caractérisé en ce que** l'épanouissement polaire (14a ; 14b ; 14c ; 14d) comporte un diamètre intérieur (38a) constant dans la zone périphérique axiale (18a ; 18b, 18c ; 18d).

15. Appareil ménager selon la revendication 7,
**caractérisé en ce que** le profil de coupe axial comporte un échelon (40d) sur un périmètre intérieur (66d).
